# EUROPEAN PATENT APPLICATION

(11) **EP 4 694 127 A1**
(43) Date of publication of application: **11.02.2026**
(21) Application number: 24796061.0
(22) Date of filing: 23.04.2024
(51) Int. Cl.: H04N 19/184, G06N 3/02

(54) **IMAGE CODING METHOD, IMAGE DECODING METHOD AND APPARATUS**

(30) Priority: 24.04.2023 CN 202310476967; 28.07.2023 CN 202310956879
(71) Applicant: Huawei Technologies Co., Ltd., Shenzhen, Guangdong 518129 (CN)
(72) Inventor: YU, Dequan, Shenzhen, Guangdong 518129 (CN); ZHAO, Yin, Shenzhen, Guangdong 518129 (CN); ALSHINA, Elena Alexandrovna, Shenzhen, Guangdong 518129 (CN)
(74) Representative: Eisenführ Speiser
(86) International application number: PCT/CN2024/089342
(87) International publication number: WO 2024/222681

(57) **Abstract**

A picture encoding and decoding method and apparatus are provided, and relate to the artificial intelligence field and the picture compression field, to provide an encoding and decoding scheme, thereby meeting requirements of different application scenarios. According to the encoding and decoding method provided in this application, a used encoder and decoder network may be determined based on profile information (or identification information). That is, a codec may select corresponding profile information based on a capability of a decoding device, to select or indicate different encoder and decoder networks. In this way, the network may not only have a capability of adapting to a terminal side with low computing power, but also have a capability of adapting to a terminal side with higher computing power.

## Description

### CROSS-REFERENCE TO RELATED APPLICATIONS

This application claims priorities to Chinese Patent Application No. 202310476967.6, filed with the China National Intellectual Property Administration on April 24, 2023 and entitled "PICTURE ENCODING AND DECODING METHOD AND APPARATUS", and to Chinese Patent Application No. 202310956879.6, filed with the China National Intellectual Property Administration on July 28, 2023 and entitled "PICTURE ENCODING AND DECODING METHOD AND APPARATUS", both of which are incorporated herein by reference in their entireties.

### TECHNICAL FIELD

This application relates to the field of picture compression technologies and the field of artificial intelligence technologies, and in particular, to a picture encoding and decoding method and apparatus.

### BACKGROUND

Many consumer applications (such as news, social, and shopping networking applications) require that picture decoding be completed on terminal-side devices with low computing power (such as mobile phones, personal PCs, and televisions). In some other industrial applications, picture decoding is allowed to be completed on terminal-side devices with higher computing power (such as GPU workstations equipped with independent graphics cards), and higher requirements are posed on picture compression rates.

A current neural network-based picture encoding and decoding scheme usually has a fixed network structure, and cannot meet requirements of different application scenarios.

### SUMMARY

Embodiments of this application provide a picture encoding and decoding method and apparatus, to provide an encoding and decoding scheme, thereby meeting requirements of different application scenarios.

According to a first aspect, an embodiment of this application provides a picture encoding method, including:
encoding identification information indicating a used decoder network into a bitstream, where
the identification information is a first value, indicating that the decoder network used to decode the bitstream to obtain a to-be-processed picture is a first decoder network; or
the identification information is a second value, indicating that the decoder network used to decode the bitstream to obtain a to-be-processed picture is a second decoder network, where a processing resource required by the first decoder network is higher than a processing resource required by the second decoder network; and
sending the bitstream.

The identification information may also be referred to as profile information (Profile ID).

According to the foregoing solution in this embodiment of this application, a transmit end indicates a receive end to use a network structure, so that different network structures can implement different decoding performance, thereby improving flexibility of a decoder side. A user may adjust encoder and decoder network computing power of the user based on a scenario of the user, to flexibly balance a delay and compression performance.

In a possible implementation, the first decoder network and the second decoder network are completely different decoder networks, or the first decoder network and the second decoder network share a part of subnet, or the second decoder network is a subnet of the first decoder network.

If the second decoder network is a subnet of the first decoder network, it may be understood that, when the identification information is the second value, some network layers in the first decoder network are skipped, that is, a process of performing decoding by using the second decoder network is implemented.

In a possible implementation, the method further includes:
obtaining the identification information; and
when the identification information is the first value, encoding, into the bitstream, residual information obtained by encoding the to-be-processed picture by using a first encoder network; or
when the identification information is the second value, encoding, into the bitstream, residual information obtained by encoding the to-be-processed picture by using a second encoder network, where
a processing resource required by the first encoder network is higher than a processing resource required by the second encoder network.

In the foregoing solution, for bitstreams generated by using different AI encoder networks, a decoder side may select different decoder network structures by using bitstream content, to implement decoding. This brings high flexibility to a codec side. A user may adjust encoder and decoder network computing power of the user based on a scenario of the user, to flexibly balance a delay and compression performance.

In a possible implementation, the first encoder network and the second encoder network are two different encoder networks, or the first encoder network and the second encoder network share a part of subnet, or the second encoder network is a subnet of the first encoder network.

In a possible implementation, the first encoder network includes a first feature extraction network, an autoregressive network, a side information extraction network, and a probability estimation network; and
the residual information obtained by encoding the to-be-processed picture by using the first encoder network includes:
the residual information obtained by encoding the to-be-processed picture by using the first encoder network includes:
extracting a three-dimensional feature map of the to-be-processed picture by using the first feature extraction network, where the three-dimensional feature map includes a plurality of feature elements;
extracting side information of a to-be-encoded feature element from the three-dimensional feature map by using the side information extraction network;
estimating a first probability distribution mean of the to-be-encoded feature element by using the probability estimation network based on the side information;
inputting an encoded feature element and the first probability distribution mean into the autoregressive network to obtain a second probability distribution mean of the to-be-encoded feature element; and
obtaining residual information of the to-be-encoded feature element based on the to-be-encoded feature element and the second probability distribution mean of the to-be-encoded feature element.

In a possible implementation, the first encoder network includes a second feature extraction network, a side information extraction network, and a probability estimation network; and
the residual information obtained by encoding the to-be-processed picture by using the first encoder network includes:
extracting a three-dimensional feature map of the to-be-processed picture by using the second feature extraction network, where the three-dimensional feature map includes a plurality of feature elements;
extracting side information of a to-be-encoded feature element from the three-dimensional feature map by using the side information extraction network;
estimating a probability distribution mean of the to-be-encoded feature element by using the probability estimation network based on the side information; and
obtaining residual information of the to-be-encoded feature element based on the to-be-encoded feature element and the probability distribution mean.

In a possible implementation, the second feature extraction network is a subnet of the first feature extraction network, or the second feature extraction network and the first feature extraction network are two completely different subnets.

In a possible implementation, the method further includes:
encoding the side information into the bitstream.

In a possible implementation, the identification information is located in a header of the bitstream.

According to a second aspect, an embodiment of this application provides a picture decoding method, including:
receiving a bitstream;
decoding the bitstream to obtain identification information indicating a used decoder network; and
when the identification information is a first value, decoding the bitstream to obtain a to-be-processed picture by using a first decoder network; or
when the identification information is a second value, decoding the bitstream to obtain a to-be-processed picture by using a second decoder network, where a processing resource required by the first decoder network is higher than a processing resource required by the second decoder network.

In a possible implementation, the first decoder network and the second decoder network are completely different decoder networks, or the first decoder network and the second decoder network share a part of subnet, or the second decoder network is a subnet of the first decoder network.

In a possible implementation, the first decoder network includes an entropy decoder network, a probability estimation network, an autoregressive network, and a first picture restoration network; and
decoding the bitstream to obtain the to-be-processed picture by using the first decoder network includes:
decoding the bitstream to obtain side information of a three-dimensional feature map of the to-be-processed picture by using the entropy decoder network, where the three-dimensional feature map includes a plurality of feature elements;
estimating a first probability distribution mean of a to-be-decoded feature element by using the probability estimation network based on the side information;
determining a second probability distribution mean of the to-be-decoded feature element by using the autoregressive network based on the first probability distribution mean and a decoded feature element;
decoding the bitstream to obtain residual information of the to-be-decoded feature element by using the entropy decoder network based on the second probability distribution mean, and obtaining the to-be-decoded feature element based on the residual information and the second probability distribution mean; and
restoring the to-be-processed picture by using the first picture restoration network based on the three-dimensional feature map obtained through decoding.

In a possible implementation, the second decoder network includes the entropy decoder network, the probability estimation network, and the second picture restoration network; and
decoding the bitstream to obtain the to-be-processed picture by using the second decoder network includes:
decoding the bitstream to obtain side information of a three-dimensional feature map of the to-be-processed picture by using the entropy decoder network, where the three-dimensional feature map includes a plurality of feature elements;
estimating a first probability distribution mean of a to-be-decoded feature element by using the probability estimation network based on the side information;
decoding the bitstream to obtain residual information of the to-be-decoded feature element by using the entropy decoder network based on the first probability distribution mean, and obtaining the to-be-decoded feature element based on the residual information and the first probability distribution mean; and
restoring the to-be-processed picture by using the second picture restoration network based on the three-dimensional feature map obtained through decoding.

In a possible implementation, the second picture restoration network is a subnet of the first picture restoration network, or the picture restoration network and the first picture restoration network share a part of subnet, or the second picture restoration network and the first picture restoration network are two different networks.

According to a third aspect, an embodiment of this application provides a picture encoding apparatus, including a memory and a video encoder, where
the memory is configured to store video data, where the video data includes a to-be-processed picture; and
the video encoder is configured to encode identification information indicating a used decoder network into a bitstream, where
the identification information is a first value, indicating that the decoder network used to decode the bitstream to obtain a to-be-processed picture is a first decoder network; or
the identification information is a second value, indicating that the decoder network used to decode the bitstream to obtain a to-be-processed picture is a second decoder network, where a processing resource required by the first decoder network is higher than a processing resource required by the second decoder network.

According to a fourth aspect, an embodiment of this application provides a picture decoding apparatus, including a memory and a video decoder, where
the memory is configured to store video data in a bitstream form, where the video data includes a to-be-processed picture; and
the video decoder is configured to: decode the bitstream to obtain identification information indicating a used decoder network; and
when the identification information is a first value, decode the bitstream to obtain a to-be-processed picture by using a first decoder network; or
when the identification information is a second value, decode the bitstream to obtain a to-be-processed picture by using a second decoder network, where a processing resource required by the first decoder network is higher than a processing resource required by the second decoder network.

According to a fifth aspect, an embodiment of this application provides a video decoding device, including a nonvolatile memory and a processor that are coupled to each other, where the processor invokes program code stored in the memory to perform the method described in any implementation of the second aspect.

According to a sixth aspect, an embodiment of this application provides a video encoding device, including a nonvolatile memory and a processor that are coupled to each other, where the processor invokes program code stored in the memory to perform the method described in any implementation of the first aspect or the seventeenth aspect.

According to a seventh aspect, an embodiment of this application provides a computer-readable storage medium, where the computer-readable storage medium stores program code, and when the computer program is run on a computer, the computer is enabled to perform the method according to any implementation of the second aspect.

According to an eighth aspect, an embodiment of this application provides a computer-readable storage medium, where the computer-readable storage medium stores program code, and when the computer program is run on a computer, the computer is enabled to perform the method according to any implementation of the first aspect or the seventeenth aspect.

According to a ninth aspect, an embodiment of this application provides a computer-readable storage medium, where the computer-readable storage medium stores a video bitstream decoded by one or more processors according to the method according to any implementation of the second aspect.

According to a tenth aspect, an embodiment of this application provides a computer-readable storage medium, where the computer-readable storage medium stores a video bitstream obtained through encoding by one or more processors according to the method according to any implementation of the first aspect or the seventeenth aspect.

According to an eleventh aspect, an embodiment of this application provides a computer-readable storage medium, where the computer-readable storage medium stores a bitstream, and the bitstream includes identification information, where
the identification information is a first value, indicating that a decoder network used to decode the bitstream to obtain a to-be-processed picture is a first decoder network; or
the identification information is a second value, indicating that a decoder network used to decode the bitstream to obtain a to-be-processed picture is a second decoder network, where a processing resource required by the first decoder network is higher than a processing resource required by the second decoder network.

According to a twelfth aspect, an embodiment of this application provides an encoded bitstream, where the encoded bitstream includes a plurality of syntax elements, and the plurality of syntax elements include identification information indicating a decoder network used to decode the bitstream to obtain a to-be-processed picture.

According to a thirteenth aspect, an embodiment of this application provides a video encoder, configured to encode a to-be-processed picture. For example, the video encoder may implement the method according to the first aspect or the seventeenth aspect.

According to a fourteenth aspect, an embodiment of this application provides a video decoder, configured to decode a bitstream to obtain a to-be-processed picture. For example, the video encoder may implement the method according to the second aspect.

According to a fifteenth aspect, an embodiment of this application provides an encoder network, including:
a first feature extraction network, a second feature extraction network, a quantization network, an autoregressive network, a side information extraction network, and a probability estimation network, where
when identification information indicating a used encoder network is a first value, the first feature extraction network extracts a three-dimensional feature map of a to-be-processed picture; or when identification information is a second value, the first feature extraction network extracts a three-dimensional feature map of a to-be-processed picture;
the side information extraction network extracts side information of the to-be-processed picture from an edge in the three-dimensional feature map;
the probability estimation network estimates a first probability distribution mean of a to-be-encoded feature element based on the side information; and
when the identification information indicating the used encoder network is the first value, an encoded feature element and the first probability distribution mean are input into the autoregressive network to obtain a second probability distribution mean of the to-be-encoded feature element; and residual information of the to-be-encoded feature element is obtained based on the to-be-encoded feature element and the second probability distribution mean of the to-be-encoded feature element; or
when the identification information indicating the used encoder network is the second value, residual information of the to-be-encoded feature element is obtained based on the to-be-encoded feature element and the first probability distribution mean.

In a possible implementation, the second feature extraction network is a subnet of the first feature extraction network, or the second feature extraction network and the first feature extraction network are two completely different subnets.

According to a sixteenth aspect, an embodiment of this application provides a decoder network, including:
an entropy decoder network, a probability estimation network, an autoregressive network, a first picture restoration network, and a second picture restoration network, where
the entropy decoder network decodes a bitstream to obtain side information of a three-dimensional feature map of a to-be-processed picture and identification information, where the three-dimensional feature map includes a plurality of feature elements;
the probability estimation network estimates a first probability distribution mean of a to-be-decoded feature element based on the side information; and
when the identification information is a first value, the autoregressive network determines a second probability distribution mean of the to-be-decoded feature element based on the first probability distribution mean and a decoded feature element, and the entropy decoder network decodes the bitstream to obtain residual information of the to-be-decoded feature element based on the second probability distribution mean, and obtain the to-be-decoded feature element based on the residual information and the second probability distribution mean; and the first picture restoration network restores the to-be-processed picture based on the three-dimensional feature map obtained through decoding; or
when the identification information is a second value, the entropy decoder network decodes the bitstream to obtain residual information of the to-be-decoded feature element based on the first probability distribution mean, and obtain the to-be-decoded feature element based on the residual information and the first probability distribution mean; and the second picture restoration network restores the to-be-processed picture based on the three-dimensional feature map obtained through decoding.

In a possible implementation, the second picture restoration network is a subnet of the first picture restoration network, or the second picture restoration network and the first picture restoration network share a part of subnet, or the second picture restoration network and the first picture restoration network are two different networks.

According to a seventeenth aspect, an embodiment of this application provides a picture encoding method, including:
obtaining identification information; and
when the identification information is a first value, encoding, into a bitstream, residual information obtained by encoding a to-be-processed picture based on (or by using) a first encoder network; or
when identification information is a second value, encoding, into a bitstream, residual information obtained by encoding a to-be-processed picture based on (or by using) a second encoder network, where
a processing resource required by the first encoder network is higher than a processing resource required by the second encoder network.

In a possible implementation, the method further includes:
encoding the identification information into the bitstream.

In a possible implementation, the identification information further indicates a decoder network used to decode the bitstream to obtain the to-be-processed picture, where
the identification information is a first value, indicating that the decoder network used to decode the bitstream to obtain the to-be-processed picture is a first decoder network; or
the identification information is a second value, indicating that the decoder network used to decode the bitstream to obtain the to-be-processed picture is a second decoder network, where a processing resource required by the first decoder network is higher than a processing resource required by the second decoder network.

The identification information may also be referred to as profile information (Profile ID).

In a possible implementation, the first decoder network and the second decoder network are completely different decoder networks, or the first decoder network and the second decoder network share a part of subnet, or the second decoder network is a subnet of the first decoder network.

In a possible implementation, the first encoder network and the second encoder network are two different encoder networks, or the first encoder network and the second encoder network share a part of subnet, or the second encoder network is a subnet of the first encoder network.

In a possible implementation, the first encoder network includes a first feature extraction network, an autoregressive network, a side information extraction network, and a probability estimation network; and
the residual information obtained by encoding the to-be-processed picture by using the first encoder network includes:
the residual information obtained by encoding the to-be-processed picture by using the first encoder network includes:
extracting a three-dimensional feature map of the to-be-processed picture by using the first feature extraction network, where the three-dimensional feature map includes a plurality of feature elements;
extracting side information of a to-be-encoded feature element from the three-dimensional feature map by using the side information extraction network;
estimating a first probability distribution mean of the to-be-encoded feature element by using the probability estimation network based on the side information;
inputting an encoded feature element and the first probability distribution mean into the autoregressive network to obtain a second probability distribution mean of the to-be-encoded feature element; and
obtaining residual information of the to-be-encoded feature element based on the to-be-encoded feature element and the second probability distribution mean of the to-be-encoded feature element.

In a possible implementation, the first encoder network includes a second feature extraction network, a side information extraction network, and a probability estimation network; and
the residual information obtained by encoding the to-be-processed picture by using the first encoder network includes:
extracting a three-dimensional feature map of the to-be-processed picture by using the second feature extraction network, where the three-dimensional feature map includes a plurality of feature elements;
extracting side information of a to-be-encoded feature element from the three-dimensional feature map by using the side information extraction network;
estimating a probability distribution mean of the to-be-encoded feature element by using the probability estimation network based on the side information; and
obtaining residual information of the to-be-encoded feature element based on the to-be-encoded feature element and the probability distribution mean.

In a possible implementation, the second feature extraction network is a subnet of the first feature extraction network, or the second feature extraction network and the first feature extraction network are two completely different subnets.

In a possible implementation, the method further includes:
encoding the side information into the bitstream.

In this application, based on the implementations provided in the foregoing aspects, the implementations may be further combined to provide more implementations.

### BRIEF DESCRIPTION OF DRAWINGS

FIG. 1 is an example block diagram of a coding system according to an embodiment of this application;
FIG. 2 is a diagram of a structure of a convolutional neural network according to an embodiment of this application;
FIG. 3 is a diagram of a deep learning-based video encoder and decoder network according to an embodiment of this application;
FIG. 4 is a diagram of a structure of a deep learning-based end-to-end video encoder and decoder network according to an embodiment of this application;
FIG. 5 is a schematic flowchart of an encoding and decoding method according to an embodiment of this application;
FIG. 6A is a diagram of a structure of a first encoder network according to an embodiment of this application;
FIG. 6B is a diagram of a structure of a second encoder network according to an embodiment of this application;
FIG. 7A is a diagram of an encoding process according to an embodiment of this application;
FIG. 7B is a diagram of another encoding process according to an embodiment of this application;
FIG. 8 is a diagram of a structure of a decoder network according to an embodiment of this application;
FIG. 9A is a diagram of a possible decoding process using a first decoder network according to an embodiment of this application;
FIG. 9B is a diagram of a possible decoding process using a second decoder network according to an embodiment of this application;
FIG. 10A is a diagram of an execution process of an encoder network according to an embodiment of this application;
FIG. 10B is a diagram of an execution process of a decoder network according to an embodiment of this application;
FIG. 11A and FIG. 11B are a diagram of a structure of an encoder network according to an embodiment of this application;
FIG. 12 is a diagram of a structure of a ResAU 3×3 no tanh network according to an embodiment of this application;
FIG. 13 is a diagram of an RNAB structure according to an embodiment of this application;
FIG. 14 is a diagram of a structure of a residual block layer according to an embodiment of this application;
FIG. 15 is a diagram of a network structure of a hyper decoder network according to an embodiment of this application;
FIG. 16 is a diagram of a network structure of a hyper scale decoder network according to an embodiment of this application;
FIG. 17A and FIG. 17B are a diagram of an execution process of a decoder network according to an embodiment of this application;
FIG. 18 is a diagram of a network structure of a light residual block (LightResBlock) according to an embodiment of this application;
FIG. 19 is a diagram of a structure of a decoder network according to Example 2 according to an embodiment of this application;
FIG. 20A is a diagram of an execution process of an encoder network according to Example 3 according to an embodiment of this application;
FIG. 20B is a diagram of a structure of an encoder and decoder network according to Example 3 according to an embodiment of this application;
FIG. 21A and FIG. 21B are a diagram of a structure of an encoder network according to Example 3 according to an embodiment of this application; and
FIG. 22A and FIG. 22B are a diagram of a structure of a decoder network according to Example 3 according to an embodiment of this application.

### DESCRIPTION OF EMBODIMENTS

The following describes embodiments of this application with reference to the accompanying drawings in embodiments of this application. In the following description, reference is made to the accompanying drawings, which form a part of the present disclosure and show, by way of illustration, specific aspects of embodiments of this application or specific aspects in which embodiments of this application may be used. It should be understood that embodiments of this application may be used in other aspects, and may include structural or logical changes not depicted in the accompanying drawings. Therefore, the following detailed descriptions shall not be construed in a limitative sense, and the scope of this application is defined by the appended claims. For example, it should be understood that the disclosed content with reference to the described method may also be applied to a corresponding device or system for performing the method, and vice versa. For example, if one or more specific method steps are described, a corresponding device may include one or more units such as functional units for performing the described one or more method steps (for example, one unit performs the one or more steps; or a plurality of units, each of which performs one or more of the plurality of steps), even if such one or more units are not explicitly described or illustrated in the accompanying drawings. In addition, for example, if a specific apparatus is described based on one or more units such as a functional unit, a corresponding method may include one step for implementing functionality of one or more units (for example, one step for implementing functionality of one or more units; or a plurality of steps, each of which is for implementing functionality of one or more units in a plurality of units), even if such one or more of steps are not explicitly described or illustrated in the accompanying drawings. Further, it should be understood that features of example embodiments and/or aspects described in this specification may be combined with each other, unless expressly stated otherwise.

The technical solutions in embodiments of this application may not only be applied to existing video coding standards (for example, standards such as H.264 and HEVC), but also be applied to future video coding standards (for example, the H.266 standard). Terms used in implementations of this application are merely used to explain specific embodiments of this application, but are not intended to limit this application. The following first briefly describes some related concepts in embodiments of this application.

A picture decoding and encoding method provided in embodiments of this application can be applied to the video encoding field and the picture encoding field. Specifically, the decoding and encoding method may be applied to album management, human-computer interaction, video compression or transmission, and picture compression or transmission scenarios.

An example in which the encoding and decoding method is applied to an end-to-end video picture encoding and decoding system is used. The end-to-end video picture encoding and decoding system includes two parts: picture encoding and picture decoding. Picture encoding is determined at a source, and usually includes processing (for example, compressing) an original video picture to reduce an amount of data required for representing the video picture (for more efficient storage and/or transmission). Picture decoding is determined at a destination, and usually includes inverse processing relative to an encoder, to reconstruct a picture. A current neural network-based picture encoding and decoding scheme usually has a fixed network structure, for example, an encoding and decoding model in JPEG AI VM1.0. If the network structure is adapted to a capability of a terminal side with low computing power, compression efficiency of the encoding scheme is reduced to some extent. If the network structure is adapted to computing power of a device with high computing power, the network cannot run on a device with low computing power. In the end-to-end video picture encoding and decoding system, by using the encoding and decoding method provided in this application, a used encoder and decoder network may be determined based on profile information. The profile information may also be referred to as identification information or a network identifier, and may have another name. This is not specifically limited in embodiments of this application. The profile information indicates the used decoder network. That is, a codec may select corresponding profile information based on a capability of a decoding device, to select or indicate different encoder and decoder networks. In this way, the network may not only have a capability of adapting to a terminal side with low computing power, but also have a capability of adapting to a terminal side with higher computing power.

Video encoding and decoding generally refers to processing a picture sequence that forms a video or a video sequence. In the video encoding and decoding field, terms "picture (picture)", "frame (frame)", and "image (image)" may be used as synonyms.

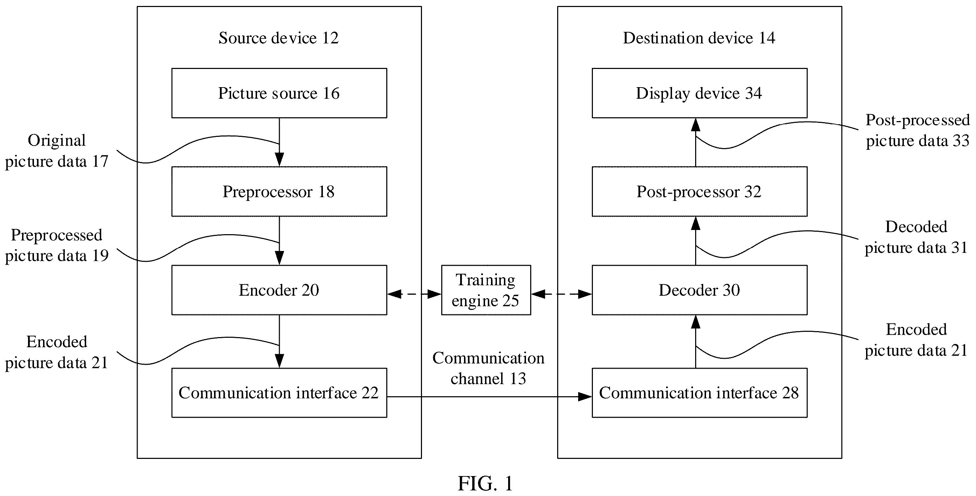

FIG. 1 is an example block diagram of a coding system according to an embodiment of this application, for example, a video coding system 10 (or a coding system 10 for short) that may utilize technologies of this application. A video encoder 20 (or an encoder 20 for short) and a video decoder 30 (or a decoder 30 for short) of the video coding system 10 represent examples of devices that may be configured to perform technologies based on various examples described in this application.

As shown in FIG. 1, the coding system 10 includes a source device 12. The source device 12 is configured to provide encoded picture data 21 such as an encoded picture to a destination device 14 configured to decode the encoded picture data 21.

The source device 12 includes the encoder 20, and optionally, may include a picture source 16, a preprocessor (or preprocessing unit) 18 such as a picture preprocessor, and a communication interface (or communication unit) 22.

The picture source 16 may include or may be any type of picture capturing device configured to capture a real-world picture, and/or any type of picture generation device, for example, a computer graphics processing unit configured to generate a computer-animated picture, or any type of device configured to obtain and/or provide a real-world picture, a computer-generated picture (for example, screen content, a virtual reality (virtual reality, VR) picture, and/or any combination thereof (for example, an augmented reality (augmented reality, AR) picture). The picture source may be any type of memory or storage that stores any of the foregoing pictures.

To distinguish processing performed by the preprocessor (or preprocessing unit) 18, a picture (or picture data) 17 may also be referred to as an original picture (or original picture data) 17.

The preprocessor 18 is configured to receive the original picture data 17, and preprocess the original picture data 17, to obtain a preprocessed picture (or preprocessed picture data) 19. For example, the preprocessing performed by the preprocessor 18 may include cropping, color format conversion (for example, from RGB to YCbCr), color correction, or denoising. It may be understood that the preprocessing unit 18 may be an optional component.

The video encoder (or encoder) 20 is configured to receive the preprocessed picture data 19 and provide the encoded picture data 21.

The communication interface 22 of the source device 12 may be configured to receive the encoded picture data 21 and send the encoded picture data 21 (or any other processed version) over a communication channel 13 to another device such as the destination device 14 or any other device, for storage or direct reconstruction.

The source device 12 may further include a memory (not shown in FIG. 1). The memory may be configured to store at least one of the following data: the original picture data 17, the preprocessed picture (or preprocessed picture data) 19, and the encoded picture data 21.

The destination device 14 includes a decoder 30, and optionally, may include a communication interface (or communication unit) 28, a post-processor (or post-processing unit) 32, and a display device 34.

The communication interface 28 of the destination device 14 is configured to directly receive the encoded picture data 21 (or any other processed version) from the source device 12 or any other source device such as a storage device, for example, an encoded picture data storage device, and provide the encoded picture data 21 to the decoder 30.

The communication interface 22 and the communication interface 28 may be configured to send or receive the encoded picture data (or encoded data) 21 via a direct communication link between the source device 12 and the destination device 14, for example, a direct wired or wireless connection, or via any type of network, for example, a wired network, a wireless network, or any combination thereof, or any type of private network, public network, or any combination thereof.

For example, the communication interface 22 may be configured to package the encoded picture data 21 into an appropriate format such as a packet, and/or process the encoded picture data by using any type of transmission encoding or processing, for transmission over a communication link or a communication network.

The communication interface 28 corresponds to the communication interface 22, and may be, for example, configured to receive transmitted data and process the transmitted data by using any type of corresponding transmission decoding or processing and/or de-packaging, to obtain the encoded picture data 21.

The communication interface 22 and communication interface 28 each may be configured as a unidirectional communication interface indicated by an arrow of the communication channel 13 pointing from the source device 12 to the destination device 14 in FIG. 1, or a bidirectional communication interface; and may be configured to send and receive a message and the like, to establish a connection, confirm and exchange any other information related to the communication link and/or data transmission such as transmission of the encoded picture data.

The video decoder (or decoder) 30 is configured to receive the encoded picture data 21 and provide decoded picture data (or decoded picture data) 31.

The post-processor 32 is configured to post-process the decoded picture data 31 (also referred to as reconstructed picture data) such as a decoded picture, to obtain post-processed picture data 33 such as a post-processed picture. For example, the post-processing performed by the post-processing unit 32 may include color format conversion (for example, from YCbCr to RGB), color correction, cropping, or re-sampling, or any other processing for generating the decoded picture data 31 for display by display device 34 or the like.

The display device 34 is configured to receive the post-processed picture data 33, to display the picture to a user, a viewer, or the like. The display device 34 may be or may include any type of display for representing the reconstructed picture, for example, an integrated or external display or monitor. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS), a digital light processor (digital light processor, DLP), or any type of other display.

The destination device 14 may further include a memory (not shown in FIG. 1). The memory may be configured to store at least one of the following data: the encoded picture data 21, the decoded picture data 31, and the post-processed picture data 33.

The coding system 10 further includes a training engine 25. The training engine 25 is configured to train the encoder 20 to process an input picture, picture region, or picture block, to obtain a feature map of the input picture, picture region, or picture block, obtain an estimated probability distribution of the feature map, and encode the feature map based on the estimated probability distribution.

The training engine 25 is further configured to train the decoder 30, to obtain an estimated probability distribution of a bitstream, decode the bitstream based on the estimated probability distribution to obtain a feature map, and reconstruct the feature map to obtain a reconstructed picture.

As shown in FIG. 1, the source device 12 and the destination device 14 are separate devices. However, device embodiments may include both the source device 12 and the destination device 14, or include functions of both the source device 12 and the destination device 14, that is, include both the source device 12 or a corresponding function thereof and the destination device 14 or a corresponding function thereof. In these embodiments, the source device 12 or the corresponding function thereof and the destination device 14 or the corresponding function thereof may be implemented by same hardware and/or software or by separate hardware and/or software or any combination thereof.

Based on the description, it is clear for a skilled person that existence and (accurate) division of different units or functions of the source device 12 and/or the destination device 14 shown in FIG. 1 may vary depending on an actual device and application.

In recent years, applying deep learning (deep learning) to the video encoding and decoding field gradually becomes a trend. The deep learning is multi-layer learning at different abstraction layers by using a machine learning algorithm. Deep learning-based video encoding and decoding may also be referred to as AI video encoding and decoding or neural network-based video encoding and decoding. Embodiments of this application relate to application of a neural network. For ease of understanding, the following first explains some nouns or terms used in embodiments of this application. The nouns or terms are also used as a part of content of the present invention.

### (1) Artificial neural network (artificial neural network, ANN):

The artificial neural network is also referred to as a neural network (NN), and is a dynamic system that is established manually and uses a directed graph as a topology structure. The artificial neural network processes information by using a continuous or discontinuous input as a status response, and is an information processing system that simulates a human brain structure and its functions. After decades of development, the artificial neural network has been widely used in many fields, such as pattern recognition, automatic control, signal processing, decision-making assistance, artificial intelligence, and scientific computing, and has achieved extensive success. Generally, one network includes an input layer, a hidden layer, and an output layer. The neural network in this application may include a plurality of types, for example, a deep neural network (deep neural network, DNN), a convolutional neural network (convolutional neural network, CNN), a recurrent neural network (recurrent neural network, RNN), a residual network, a neural network using a transformer model, or another neural network. Some neural networks are described by way of example below.

### (2) Convolutional neural network:

The convolutional neural network (convolutional neuron network, CNN) is a deep neural network with a convolutional structure, and is a deep learning (deep learning) architecture. The deep learning architecture means that multi-layer learning is performed at different abstraction lays by using a machine learning algorithm. As a deep learning architecture, the CNN is a feed-forward (feed-forward) artificial neural network, and each neuron in the feed-forward artificial neural network processes data input into the neuron.

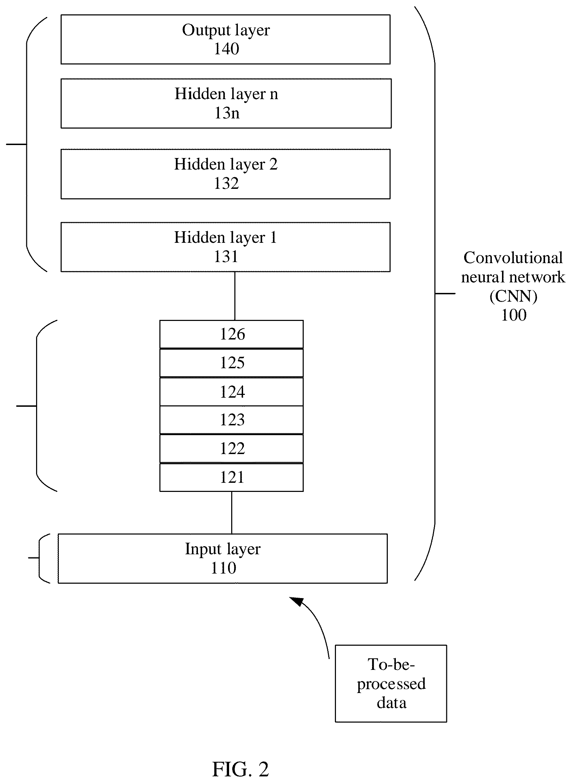

As shown in FIG. 2, a convolutional neural network (CNN) 100 may include an input layer 110, a convolutional layer/pooling layer 120, where the pooling layer is optional, and a neural network layer 130. As shown in FIG. 2, the convolutional layer/pooling layer 120 may include, for example, layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layers 121 and 122 are convolutional layers, the layer 123 is a pooling layer, the layers 124 and 125 are convolutional layers, and the layer 126 is a pooling layer. That is, an output of a convolutional layer may be used as an input of a subsequent pooling layer, or may be used as an input of another convolutional layer to continue to perform a convolutional operation. The convolutional layer 121 is used as an example. The convolutional layer 121 may include a plurality of convolutional operators, and the convolutional operators are also referred to as convolutional kernels. The convolutional operator may be essentially a weight matrix, and the weight matrix is usually predefined. Picture processing is used as an example. Different weight matrices are used to extract different features in a picture. For example, one weight matrix is used to extract edge information of the picture, another weight matrix is used to extract a specific color of the picture, and still another weight matrix is used to blur unnecessary noise in the picture.

Weight values in these weight matrices need to be obtained through a large amount of training in actual application. Each weight matrix formed by the weight values obtained through training may be used to extract information from input data, to help the convolutional neural network 100 perform correct prediction.

When the convolutional neural network 100 has a plurality of convolutional layers, a large quantity of general features are usually extracted at an initial convolutional layer (for example, 121). The general feature may also be referred to as a low-level feature. As a depth of the convolutional neural network 100 increases, a feature extracted at a later convolutional layer (for example, 126) is more complex, for example, a higher-level semantic feature. A higher semantic feature is more applicable to a to-be-resolved problem.

### Pooling layer:

Because a quantity of training parameters often needs to be reduced, a pooling layer often needs to be periodically introduced after a convolutional layer. For the layers 121 to 126 shown in 120 in FIG. 2, one convolutional layer may be followed by one pooling layer, or a plurality of convolutional layers may be followed by one or more pooling layers. During picture processing, the pooling layer is only used to reduce a space size of a picture. The pooling layer may include an average pooling operator and/or a maximum pooling operator, to perform sampling on the input picture to obtain a picture with a small size. The average pooling operator may calculate a pixel value in the picture in a specific range, to generate an average value. The maximum pooling operator may use a maximum pixel in a specific range as a maximum pooling result. In addition, similar to the size of the weight matrix that needs to be related to the size of the picture at the convolutional layer, an operator also needs to be related to a size of a picture at the pooling layer. A size of a processed picture output from the pooling layer may be less than a size of a picture input to the pooling layer. Each pixel in the picture output from the pooling layer represents an average value or a maximum value of a corresponding sub-region of the picture input into the pooling layer.

After processing is performed at the convolutional layer/pooling layer 120, the convolutional neural network 100 still cannot output required output information. This is because the convolutional layer/pooling layer 120 only extracts a feature and reduces a parameter brought by the input picture, as described above. However, to generate final output information (required type information or other related information), the convolutional neural network 100 needs to use the neural network layer 130 to generate an output of one required type or a group of required types. Therefore, the neural network layer 130 may include a plurality of hidden layers (131, 132, ..., and 13n shown in FIG. 2) and an output layer 140. Parameters included in the plurality of hidden layers may be obtained through pre-training based on related training data of a specific task type. For example, the task type may include picture recognition, picture classification, and super-resolution picture reconstruction.

The plurality of hidden layers in the neural network layer 130 are followed by the output layer 140, namely, the last layer of the entire convolutional neural network 100. The output layer 140 has a loss function similar to classification cross entropy, and the loss function is specifically used to calculate a prediction error. Once forward propagation of the entire convolutional neural network 100 (for example, propagation from layers 110 to 140 in FIG. 2 is forward propagation) is completed, back propagation (for example, propagation from layers 140 to 110 in FIG. 2 is back propagation) is started to update weight values and deviations of the layers mentioned above, to reduce a loss of the convolutional neural network 100 and an error between an ideal result and a result output by the convolutional neural network 100 through the output layer.

It should be noted that the convolutional neural network 100 shown in FIG. 2 is merely used as an example of a convolutional neural network. In specific application, the convolutional neural network may alternatively exist in a form of another network model, for example, a plurality of parallel convolutional layers/pooling layers, and extracted features are all input into the neural network layer 130 for processing.

### (3) Loss function:

In a process of training a neural network, because it is expected that an output of the neural network is as close as possible to a value that actually needs to be predicted, a current predicted value of the network and an actually expected target value may be compared, and then a weight vector of each layer of the neural network is updated based on a difference between the current predicted value and the target value (certainly, before a first update, there is usually an initialization process, that is, preconfiguring a parameter for each layer of the neural network). For example, if the predicted value of the network is large, the weight vector is adjusted to decrease the predicted value, and adjustment is continuously performed, until the neural network can predict the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

### (4) Linear operation:

Linearity refers to a proportional and straight-line relationship between quantities, and may be mathematically understood as a function whose first-order derivative is a constant. The linear operation may be but is not limited to an addition operation, a null operation, an identity operation, a convolutional operation, a layer normalization (layer normalization, LN) operation, and a pooling operation. The linear operation may also be referred to as linear mapping. The linear mapping needs to meet two conditions: homogeneity and additivity. If either condition is not met, non-linear mapping occurs.

Homogeneity means that f(ax)=af(x), and additivity means that f(x+y)=f(x)+f(y). For example, f(x)=ax is linear. It should be noted that x, a, and f(x) herein are not necessarily scalars, and may be vectors or matrices, forming linear space of any dimension. If x and f(x) are n-dimensional vectors, when a is a constant, it is equivalent that homogeneity is met; or when a is a matrix, it is equivalent that additivity is met. Relatively, a function graph that is a straight line does not necessarily comply with linear mapping. For example, f(x)=ax+b does not meet homogeneity or additivity, and therefore belongs to non-linear mapping.

In embodiments of this application, a combination of a plurality of linear operations may be referred to as a linear operation, and each linear operation included in the linear operation may also be referred to as a sub-linear operation.

### (5) Attention model:

The attention model is a neural network that uses an attention mechanism. In deep learning, the attention mechanism may be defined in a broad sense as a weight vector that describes importance: to predict or infer an element by using the weight vector. For example, for a pixel in a picture or a word in a sentence, a correlation between a target element and another element may be quantitatively estimated by using an attention vector, and a weighted sum of the attention vector is used as an approximate value of a target.

The attention mechanism in deep learning simulates an attention mechanism of a human brain. For example, when a man views a picture, although the human eyes can see the whole picture, when the man observes the picture in depth, the eyes focus only on a part of the picture, and at this time, the human brain focuses on this small pattern. In other words, when the man observes a picture carefully, attention of the human brain to the entire picture is not balanced, and is distinguished by a specific weight. This is a core idea of the attention mechanism.

Simply, a human visual processing system usually selectively focuses on some parts of a picture and ignores other irrelevant information, thereby facilitating perception of the human brain. Similarly, in the attention mechanism of deep learning, some parts of an input may be more relevant than others in some issues involving language, speech, or vision. Therefore, by using the attention mechanism in the attention model, the attention model can dynamically focus only on a part of input that helps effectively execute a task at hand.

### (6) Self-attention network:

The self-attention network is a neural network that uses a self-attention mechanism. The self-attention mechanism is an extension of the attention mechanism. The self-attention mechanism is actually an attention mechanism that associates different locations of a single sequence to calculate a representation of a same sequence. The self-attention mechanism can play a key role in machine reading, abstract summarization, or picture description generation. For example, the self-attention network is applied to natural language processing. The self-attention network processes input data of any length, generates a new feature representation of the input data, and then converts the feature expression into a target word. A self-attention network layer in the self-attention network uses the attention mechanism to obtain a relationship between all other words, thereby generating a new feature representation of each word. An advantage of the self-attention network is that the attention mechanism can directly capture a relationship between all words in a sentence without considering a word position.

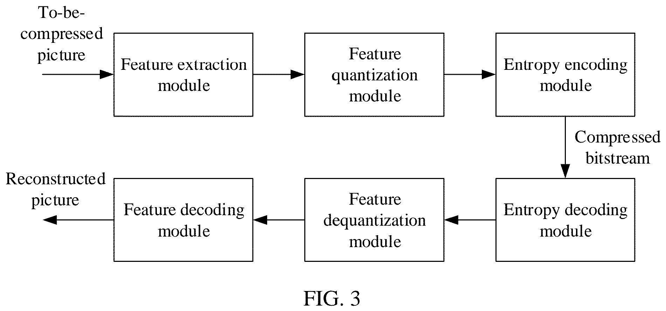

FIG. 3 is a diagram of a deep learning-based video encoder and decoder network (or system) according to an embodiment of this application. FIG. 2 is described by using entropy encoding and decoding as an example. The network includes a feature extraction module, a feature quantization module, an entropy encoding module, an entropy decoding module, a feature dequantization module, and a feature decoding (or picture reconstruction) module.

At an encoder side, an original picture (or a to-be-compressed picture) is input into the feature extraction module, and the feature extraction module outputs an extracted three-dimensional feature map of the original picture by stacking a plurality of convolutional layers with reference to a nonlinear mapping activation function. The feature quantization module quantizes a feature value of a floating-point number in the three-dimensional feature map, to obtain a quantized feature map. Entropy encoding is performed on the quantized three-dimensional feature map to obtain a bitstream.

At a decoder side, the entropy decoding module parses a bitstream to obtain a quantized three-dimensional feature map. The feature dequantization module dequantizes a feature value of an integer in the quantized feature map, to obtain a dequantized feature map. After the dequantized feature map is reconstructed by the feature decoding module, a reconstructed picture is obtained.

Entropy encoding is encoding that no information is lost according to an entropy principle in an encoding process. Entropy encoding is used to apply an entropy encoding algorithm or scheme to a quantized coefficient and another syntax element, to obtain encoded data that can be output by an output end in a form of an encoded bitstream or the like, so that a decoder or the like can receive and use a parameter used for decoding. The encoded bitstream may be transmitted to the decoder, or stored in a memory for later transmission or retrieval by the decoder. The entropy encoding algorithm or scheme includes but is not limited to: a variable length coding (variable length coding, VLC) scheme, a context-adaptive VLC scheme (context-adaptive VLC, CALVC), an arithmetic coding scheme, a binarization algorithm, context-adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding, or another entropy coding method or technology.

Alternatively, the network may not include a feature quantization module and a feature dequantization module. In this case, the network may directly perform a series of processing on a feature map whose feature map is a floating-point number. Alternatively, integerization processing may be performed on the network, so that all feature values in a feature map output by the feature extraction module are integers.

After the to-be-processed picture (or the to-be-compressed picture) passes through the feature extraction module and the feature quantization module, the quantized three-dimensional feature map is obtained. When processing each feature value in the quantized three-dimensional feature map, the entropy encoding module may estimate a probability distribution of the feature value by using a processed feature value in a neighborhood as a context, to obtain a probability distribution of the feature value, and perform subsequent encoding based on the probability distribution, to obtain an encoded bitstream.

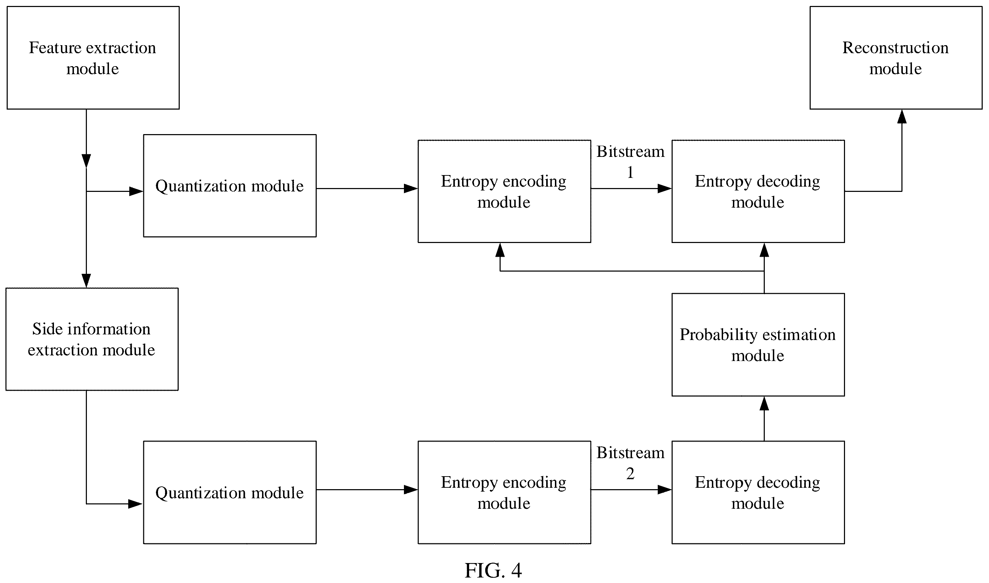

FIG. 4 is a diagram of a structure of a deep learning-based end-to-end video encoder and decoder network according to an embodiment of this application. FIG. 4 is described by using entropy encoding and decoding as an example. The neural network includes a feature extraction module, a quantization module, a side information extraction module, an entropy encoding module, an entropy decoding module, a probability estimation module, and a reconstruction module. Entropy encoding may be an autoencoder (Auto Encoder, AE), and entropy decoding may be an autodecoder (Auto Decoder, AD).

At an encoder side, an original picture x is input into the feature extraction module, and the feature extraction module outputs a feature map y of the original picture. The feature map y is input into the quantization module, the quantization module outputs a quantized feature map, and the quantized feature map is input into the entropy encoding module. In addition, the feature map y is input into the side information extraction module, and the side information extraction module outputs side information z. The side information z is input into the quantization module, and the quantization module outputs quantized side information. The quantized side information passes through the entropy encoding module to obtain a bitstream of the side information, and then passes through the entropy decoding module to obtain decoded side information. The decoded side information is input into the probability estimation module. The probability estimation module outputs a probability distribution of each feature element [x] [y] [i] in the quantized feature map, and inputs the probability distribution of each feature element into the entropy encoding module. The entropy encoding module performs entropy encoding on each input feature element based on the probability distribution of each feature element, to obtain a hyperprior bitstream.

The side information z is feature information, which is represented as a three-dimensional feature map. A quantity of feature elements included in the three-dimensional feature map is less than a quantity of feature elements included in the feature map y.

At a decoder side, the entropy decoding module parses a bitstream of side information to obtain the side information, and inputs the side information into the probability estimation module. The probability estimation module outputs a probability distribution of each feature element [x][y][i] in a to-be-decoded symbol. The probability distribution of each feature element [x] [y] [i] is input into the entropy decoding module. The entropy decoding module performs entropy decoding on each feature element based on the probability distribution of each feature element, to obtain a decoded feature map. The decoded feature map is input into the reconstruction module, and the reconstruction module outputs a reconstructed picture.

In addition, in probability estimation modules of some variational autoencoders (Variational Auto Encoder, VAE), an encoded or decoded feature element around a current feature element is further used to estimate a probability distribution of the current feature element more accurately.

It should be noted that the network structures shown in FIG. 3 and FIG. 4 are merely examples for description. Modules included in the network and structures of the modules are not limited in embodiments of this application.

In some possible scenarios, to further improve accuracy of a mean, an autoregressive module may be added. The autoregressive module may further obtain, based on a mean output by the probability distribution module and the quantized feature map, a probability distribution used to obtain a residual.

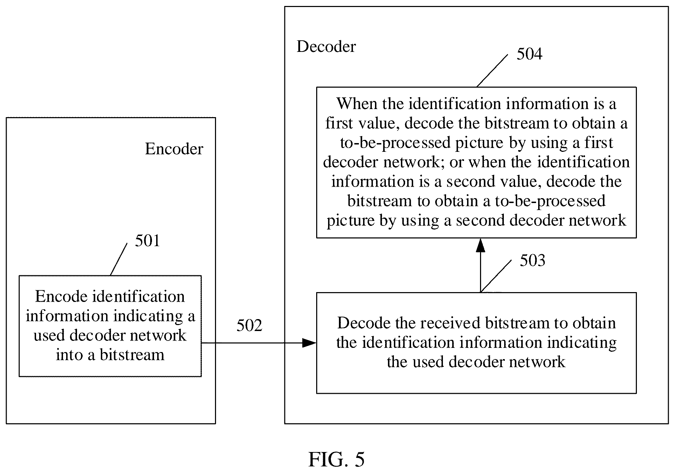

The following describes in detail an encoding and decoding method provided in embodiments of this application. FIG. 5 is a schematic flowchart of an encoding and decoding method according to an embodiment of this application. The method process may be performed by two electronic devices or by one electronic device. For example, when the method process is performed by two electronic devices, one electronic device includes an encoder, configured to indicate an encoding operation, and the other electronic device includes a decoder, configured to perform a decoding operation. When the method process is performed by one electronic device, the electronic device may include an encoder and a decoder. The method may be performed by the electronic device by invoking a neural network model. The method process is described as a series of operations. It should be understood that the method process may be performed in various sequences and/or simultaneously, and is not limited to an execution sequence shown in FIG. 5.

501: The encoder encodes identification information indicating a used decoder network into a bitstream.

The identification information is a first value, indicating that the decoder network used to decode the bitstream to obtain a to-be-processed picture is a first decoder network; or the identification information is a second value, indicating that the decoder network used to decode the bitstream to obtain a to-be-processed picture is a second decoder network. It may also be understood that the identification information is the first value, and the encoder performs an encoding operation on the to-be-processed picture by using a first encoder network corresponding to the first decoder network; or the identification information is the second value, and the encoder performs an encoding operation on the to-be-processed picture by using a second encoder network corresponding to the second decoder network. The identification information may also be referred to as profile information (Profile ID), or may also be referred to as network information, a network identifier, or another name. This is not limited in this embodiment of this application. In other words, the identification information indicates processing that needs to be supported by the decoder, for example, a general_profile_idc syntax element in the H.265 standard. In an example, the first value may be 0, and the second value may be 1; or the first value may be 1, and the second value may be 0. The first value and the second value may alternatively be other values. A processing resource (or computing power) required by the first decoder network is higher than a processing resource (or computing power) required by the second decoder network. The processing resource (computing power) may include a memory resource, a processor resource, or the like. In some embodiments, it may also be understood that decoding rates (or decompression efficiency) of the first decoder network and the second decoder network are different. For example, the decoding rate of the first decoder network is higher than the decoding rate of the second decoder network; or quality of a picture restored by the first decoder network is different from quality of a picture restored by the second decoder network. For example, the quality of the picture restored by the first decoder network is higher than the quality of the picture restored by the second decoder network.

502: The encoder sends the bitstream.

503: The decoder decodes the received bitstream to obtain the identification information indicating the used decoder network.

504: When the identification information is the first value, decode the bitstream to obtain the to-be-processed picture by using the first decoder network; or when the identification information is the second value, decode the bitstream to obtain the to-be-processed picture by using the second decoder network.

In a possible implementation, the first decoder network and the second decoder network are completely different decoder networks, or the first decoder network and the second decoder network share a part of subnet, or the second decoder network is a subnet of the first decoder network.

In some embodiments, the identification information may further include other values indicating different decoder networks. It may be understood that a plurality of different decoder networks are indicated by a plurality of different values. For example, the identification information is a third value, indicating that the used decoder network is a third decoder network. A decoding rate of the third decoder network is different from the decoding rate of the first decoder network (or the second decoder network). In some embodiments, the decoding rate of the third decoder network is higher than the decoding rate of the second decoder network, and the decoding rate of the second decoder network is higher than the decoding rate of the first decoder network. In some other embodiments, the decoding rate of the third decoder network is between the decoding rate of the first decoder network and the decoding rate of the second decoder network. Herein, only three decoder networks are used as an example. A quantity of decoder networks is not specifically limited in this embodiment of this application.

It may be understood that a higher picture decoding rate indicates a shorter picture decoding delay.

For another example, quality of a picture restored by the third decoder network is different from the quality of the picture restored by the first decoder network (or the second decoder network).

The quality of the picture restored by the third decoder network is higher than the quality of the picture restored by the second decoder network, and the quality of the picture restored by the second decoder network is higher than the quality of the picture restored by the first decoder network. In some other embodiments, the quality of the picture restored by the third decoder network is between the quality of the picture restored by the first decoder network and the quality of the picture restored by the second decoder network.

In some scenarios, when the third decoder network is further included, the third decoder network is different from the first decoder network (and the second decoder network). For example, the third decoder network, the second decoder network, and the first decoder network are three different decoder networks; or the third decoder network and the second decoder network (or the first decoder network) share a part of subnet; or the third decoder network is a subnet of the second decoder network (or the first decoder network).

That the first decoder network and the second decoder network share a part of subnet may be understood as that the first decoder network reuses a part of subnet of the second decoder network. For example, the first decoder network includes a network A, a network B, and a network C, the second decoder network includes a network D, the network B, and the network C, and the two decoder networks share the network B. Therefore, when the first decoder network is used, after data is input into the network A, an output result of the network A is input into the network B, and an output result of the network B is input into the network C. When the second decoder network is used, it may be understood that data is input into the network D, an output result of the network D is input into the network B, and an output result of the network B is input into the network C.

For another example, the first decoder network is a subnet of the second decoder network. For example, the first decoder network includes a network A1, a network A2, and a network A3. The second decoder network includes the network A1 and the network A3. When the first decoder network is used, data is input into the network A1, an output result of the network A1 is input into the network A2, and an output of the network A2 is input into the network A3. When the second decoder network is used, it may be understood that when data is input into the network A1, an output result of the network A1 is not input into the network A2, but skips the network A2 and is input into the network A3.

In another possible implementation, when performing encoding, the encoder may use different encoder networks based on different values of the identification information. Alternatively, after encoding the to-be-processed picture into the bitstream by using an encoder network, the encoder may encode, into the bitstream, identification information of a decoder network corresponding to the used encoder network. It may be understood that the identification information indicates both the used decoder network and the used encoder network. When the identification information is the first value, residual information obtained by encoding the to-be-processed picture by using the first encoder network is encoded into the bitstream; or when the identification information is the second value, residual information obtained by encoding the to-be-processed picture by using the second encoder network is encoded into the bitstream, where a processing resource (or computing power) required by the first encoder network is higher than a processing resource (or computing power) required by the second encoder network. It should be noted that the first encoder network and the first decoder network may be a pair of networks, and after the first encoder network is used for encoding, the first decoder network is used for decoding; and the second encoder network and the second decoder network are a pair of networks, and after the second encoder network is used for encoding, the second decoder network is used for decoding.

In some embodiments, the first encoder network and the second encoder network are two different encoder networks, or the first encoder network and the second encoder network share a part of subnet, or the first encoder network is a subnet of the second encoder network.

The identification information may further have other values, and different values indicate different used encoder networks. For example, the identification information is a third value, the used encoder network is a third encoder network, and the used decoder network is a third decoder network. It should be noted that the third encoder network and the third decoder network are a pair of networks, and after the third encoder network is used for encoding, the third decoder network is used for decoding. An encoding rate of the third encoder network is different from an encoding rate of the first encoder network (or the second encoder network). In some embodiments, the encoding rate of the third encoder network is higher than the encoding rate of the second encoder network, and the encoding rate of the second encoder network is higher than the encoding rate of the first encoder network. In some other embodiments, the encoding rate of the third encoder network is between the encoding rate of the first encoder network and the encoding rate of the second encoder network.

It may be understood that a higher picture encoding rate indicates a shorter picture encoding delay.

For another example, quality of a picture restored by the third encoder network is different from quality of a picture restored by the first encoder network (or the second encoder network).

The quality of the picture restored by the third encoder network is higher than the quality of the picture restored by the second encoder network, and the quality of the picture restored by the second encoder network is higher than the quality of the picture restored by the first encoder network. In some other embodiments, the quality of the picture restored by the third encoder network is between the quality of the picture restored by the first encoder network and the quality of the picture restored by the second encoder network.

In some scenarios, when the third encoder network is further included, the third encoder network is different from the first encoder network (and the second encoder network). For example, the third encoder network, the second encoder network, and the first encoder network are three different encoder networks; or the third encoder network and the second encoder network (or the first encoder network) share a part of subnet; or the third encoder network is a subnet of the second encoder network (or the first encoder network).

For example, the first encoder network includes a feature extraction module, a quantization module, a side information extraction module, an entropy encoding module, and a probability estimation module. The second encoder network also includes a feature extraction module, a quantization module, a side information extraction module, an entropy encoding module, and a probability estimation module. In one manner, a used network structure of at least one module in the first encoder network is different from that of at least one module in the second encoder network. For example, a network structure of the probability estimation module in the first encoder network is different from that of the probability estimation module in the second encoder network. For another example, a network structure of the feature extraction module in the first encoder network is different from that of the feature extraction module in the second encoder network.

For example, the feature extraction module in the first encoder network is referred to as a first feature extraction module, and the feature extraction module in the second encoder network is referred to as a second feature extraction module. It should be noted that, for each module that belongs to a neural network, the "module" may also be referred to as a "network". For example, the feature extraction module may be referred to as a feature extraction network. For another example, the quantization module may also be referred to as a quantization network. That the network structure of the feature extraction module in the first encoder network is different from that of the feature extraction module in the second encoder network may be that the second feature extraction network is a subnet of the first feature extraction network, or the second feature extraction network and the first feature extraction network are two completely different subnets, or the second feature extraction network and the first feature extraction network share one or more subnets. That the network structure of the probability estimation module in the first encoder network is different from that of the probability estimation module in the second encoder network may be that the second feature extraction network is a subnet of the first feature extraction network, or the second feature extraction network and the first feature extraction network are two completely different subnets, or the second feature extraction network and the first feature extraction network share one or more subnets.

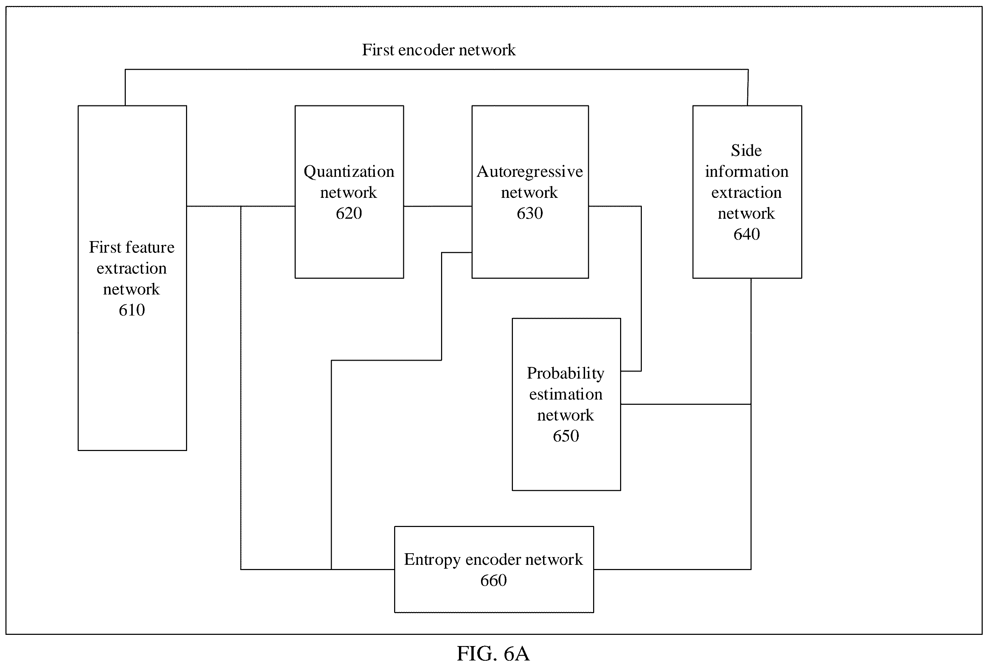

In an example, refer to FIG. 6A. A network structure of the first encoder network is as follows: The first encoder network includes a first feature extraction network 610, a quantization network 620, an autoregressive network 630, a side information extraction network 640, and a probability estimation network 650.

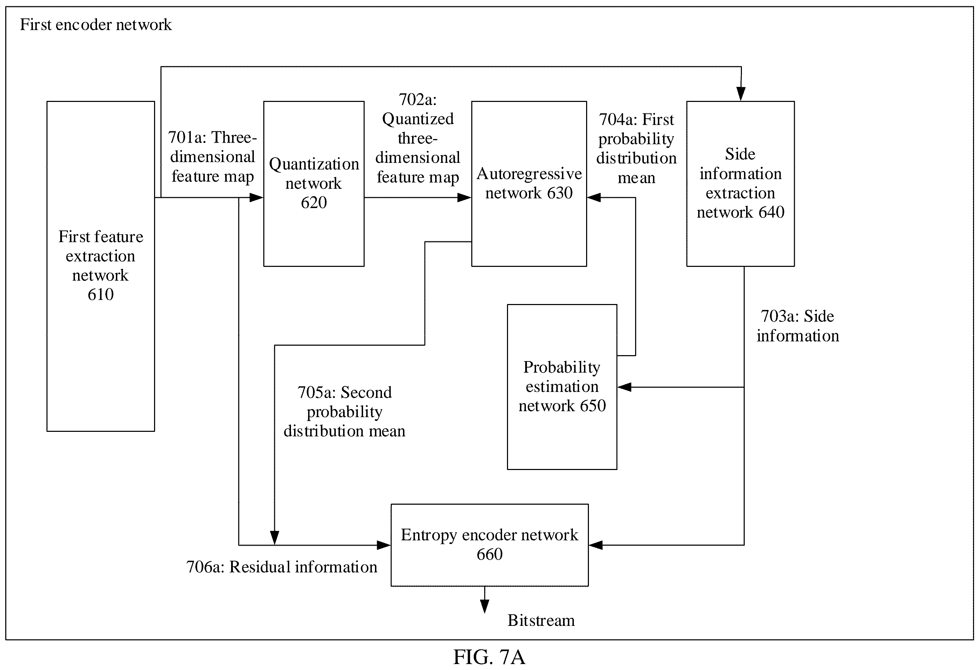

Further, the residual information obtained by encoding the to-be-processed picture by using the first encoder network may be implemented in the following implementation. FIG. 7A is a diagram of a possible process of encoding the residual information.

701a: Extract a three-dimensional feature map of the to-be-processed picture by using the first feature extraction network 610.

702a: Quantize the three-dimensional picture feature by using the quantization network 620 to obtain a quantized three-dimensional feature map.

703a: Extract side information of the to-be-processed picture from an edge in the three-dimensional feature map by using the side information extraction network 640.

704a: Estimate a first probability distribution mean of the to-be-processed picture by using the probability estimation network 650 based on the side information.

705a: Input the quantized three-dimensional feature map and the first probability distribution information into the autoregressive network 630 to obtain a second probability distribution mean.

706a: Obtain the residual information based on the third-dimensional feature map of the to-be-processed picture and the second probability distribution mean.

The first encoder network may further include an entropy encoder network 660. The entropy encoder network 660 may encode the residual information and the side information into the bitstream.

In some scenarios, it may be understood that the side information is encoded into a bitstream 1, the residual information is encoded into a bitstream 2, and then the bitstream 1 and the bitstream are combined into one bitstream. In another scenario, the side information and the residual information may be encoded into one bitstream.

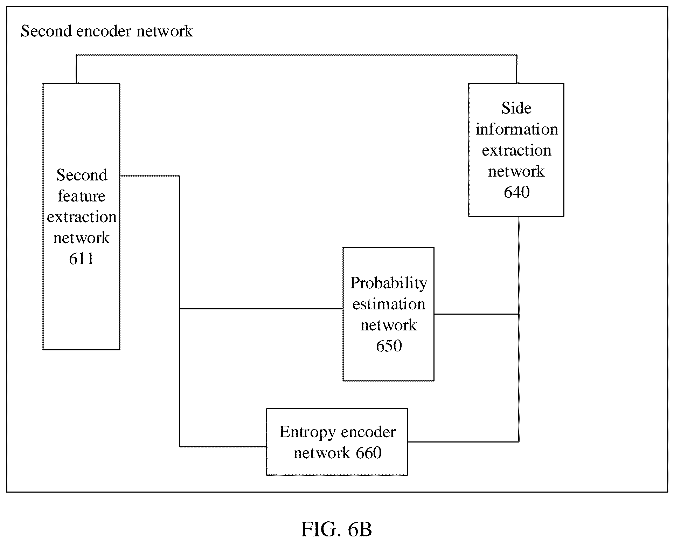

In another example, refer to FIG. 6B. A network structure of the second encoder network is as follows: The second encoder network includes a second feature extraction network 611, the side information extraction network 640, and the probability estimation network 650.

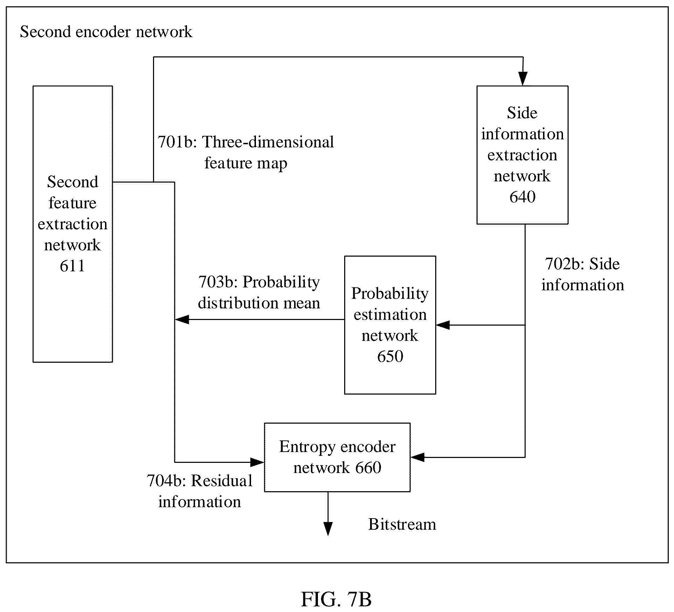

Further, the residual information obtained by encoding the to-be-processed picture by using the second encoder network may be implemented in the following implementation. FIG. 7B is a diagram of a possible process of encoding the residual information.

701b: Extract a three-dimensional feature map of the to-be-processed picture by using the second feature extraction network 611.

702b: Extract side information from the three-dimensional feature map by using the side information extraction network 640.

703b: Estimate a probability distribution mean of the to-be-processed picture by using the probability estimation network 650 based on the side information.

704b: Obtain the residual information based on the third-dimensional feature map of the to-be-processed picture and the probability distribution mean.

The second encoder network may further include an entropy encoder network 660. The entropy encoder network 660 may encode the residual information and the side information into a bitstream. In some scenarios, it may be understood that the side information is encoded into a bitstream 1, the residual information is encoded into a bitstream 2, and then the bitstream 1 and the bitstream are combined into one bitstream. In another scenario, the side information and the residual information may be encoded into one bitstream.

The identification information in this embodiment of this application may be located in a header (header) of the bitstream. In some scenarios, the identification information may alternatively be added to a suffix of a bitstream file. For example, different identification information corresponds to different suffixes. For example, the header includes information such as a picture length and width, a picture format, and a profile ID. The information needs to be stored in an agreed sequence. A specific storage sequence is not specifically limited in this application.

For example, the header of the bitstream may include one or more of the following parameter information: The parameter information includes profile information (profile ID), a picture height (H) and width (W), a position and a size of a tile (Tiles) in latent space, a control flag of each tool, scaling factors of primary and secondary components, a model index (model Idx): a learnable model index, and a bit rate control parameter βᵥ. The rate control parameter includes a rate control parameter β_{Y} of the primary component, a rate control parameter of the secondary component β_{UV}, and the like.

For example, the parameters of the header of the bitstream may be encoded by using a fixed bit length.

The following describes the parameter information.

W represents a width of the input picture. For example, W may range from 1 pixel to 8192 pixels.

H represents a height of the input picture. For example, H may range from 1 pixel to 8192 pixels.

format represents a data format of the input picture, for example, YUV420, YUV444, or sRGB.

bit_depth represents a bit depth of the input picture, for example, 8 and 10.

β is a parameter representing a quality level of a variable rate. The primary component and the secondary component may have different β. Therefore, the primary component is represented as beta_luma (B_{Y}), and the secondary component is represented as beta_chroma (β_{UV}). A value of β_{Y} is between 0 and 1, and may be represented in a form of a 16-bit fixed-point number. Y represents luminance (Luminance or Luma). UV represents chrominance (chroma). (parameter indicating quality level for variable rate. Primary and secondary component might have different betas, so for primary (beta_luma) and secondary (beta_chroma) are signaled. The value βᵥ lays between 0 and 1, and signaled as a 16 bit fixed point numbers).

Color transform information (color_transform_info): By default, a coded representation of a signal is YUV Bt.709 (full range). However, custom color transform is also supported. In this case, 12 coefficients (conversion matrix and offset) may be used and encoded as a fixed-point number with 8-bit resolution. (by default coded representation of the signal is YUV Bt.709 (full range), but also custom color transform is supported. In that case, 12 coefficients may be sent (conversion matrix and offset), encoded as a fixed point numbers with 8 bit resolution).

Tile information (tiles info): represents a decoder tile size and overlap for luminance and a decoder tile size and overlap for chrominance. Inter-channel correlation information filter (Inter Channel Correlation Information filter, ICCI) tile size and overlap. Generally, the tile has a square shape. However, because the tile may be smaller at the right or bottom picture boundary, the tile at the right or boundary may be non-rectangular. (decoder tile size and overlap for luma, decoder tile size and overlap for chroma. ICCI tiles size and overlap. Tiles have square shape except at right or bottom picture boundary, where they may be smaller and non-rectangular).

Skip mode enable flag (SkipMode_enable_flag): indicates whether a skip mode (SkipMode) is used for picture encoding. (signaled per image, indicates if SkipMode is used).

RVS enable flag (RVS_enable_flag): indicates whether to use the residual and variance scale (Residual and Variance Scale, RVS) for encoding each picture.

LSBS enable flag (LSBS_enable_flag): indicates whether to use the decoder-side latent scale before synthesis (Latent Scale Before Synthesis, LSBS) for encoding each picture.

ICIC enable flag (ICIC_enable_flag): indicates whether to use the inter-channel correlation information filter (Inter Channel Correlation Information filter, ICCI) for encoding each picture.

numThreads: is a 16-bit unsigned integer, and specifies a number of samples processed in parallel. (16 bit unsigned integer. Specifies number of samples processed in parallel).

It should be noted that, in some scenarios, different values of the identification information (profile information) may indicate only different used decoder networks. In some other scenarios, different encoder networks are used based only on different values of the identification information. In some other scenarios, different values of the identification information indicate different used encoder networks and decoder networks.

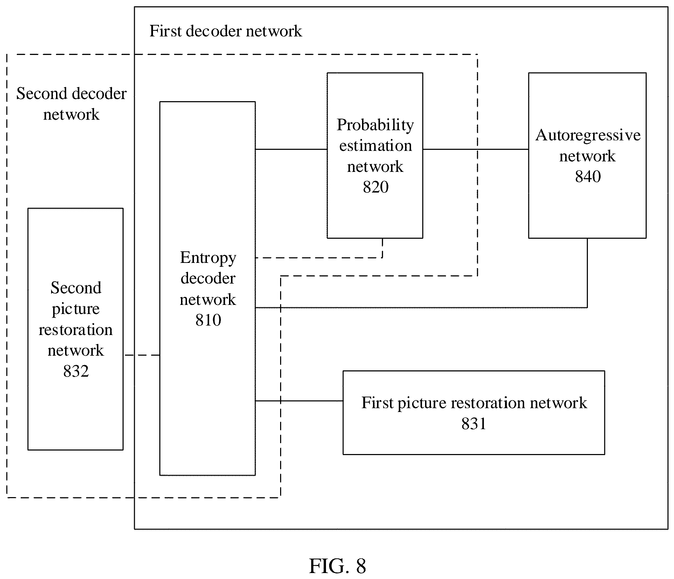

In a possible example, refer to FIG. 8. The first decoder network (or the second decoder network) may include an entropy decoder network 810, a probability estimation network 820, and a picture restoration network. The picture restoration network may also be referred to as a reconstruction network, or may have another name. This is not specifically limited in this embodiment of this application. At a decoder side, the entropy decoder network decodes a bitstream to obtain side information and residual information of a to-be-processed picture. A network structure of at least one network in the first decoder network is different from that of at least one network in the second decoder network, for example, the picture restoration network, or the probability estimation network. For example, the network structure of the picture restoration network in the first decoder network is different from that of the picture restoration network in the second decoder network. For ease of distinguishing, the picture restoration network in the first decoder network is referred to as a first picture restoration network 831, and the picture restoration network in the second decoder network is referred to as a second picture restoration network 832. That the first picture restoration network 831 is different from the second picture restoration network 832 may be, for example, that the second picture restoration network 832 is a subnet of the first picture restoration network 831, or the second picture restoration network 832 and the first picture restoration network 831 share a part of subnet, or the second picture restoration network 832 and the first picture restoration network 831 are two different networks. The first decoder network further includes an autoregressive network 840.

A decoding process is described with reference to the structure examples of the first decoder network and the second decoder network.

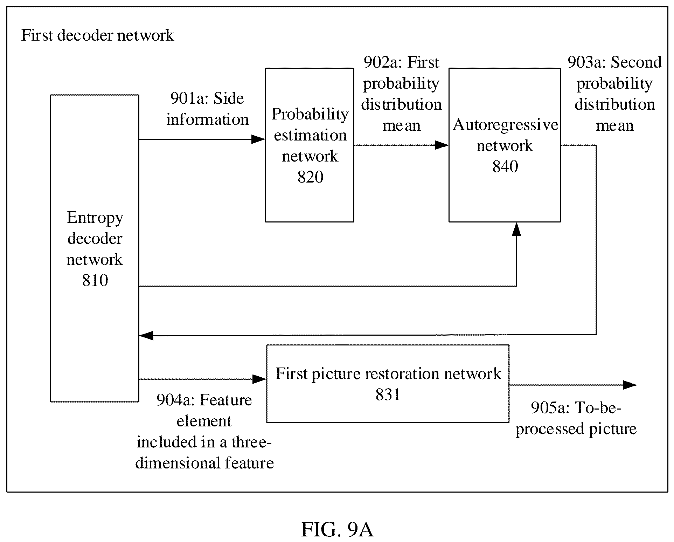

FIG. 9A is a diagram of a possible decoding process using the first decoder network.

901a: Decode the bitstream to obtain side information of a three-dimensional feature map of the to-be-processed picture by using the entropy decoder network 810, where the three-dimensional feature map includes a plurality of feature elements.

902a: Estimate a first probability distribution mean of a to-be-decoded feature element by using the probability estimation network 820 based on the side information.

903a: Determine a second probability distribution mean of the to-be-decoded feature element by using the autoregressive network 840 based on the first probability distribution mean and a decoded feature element.

904a: Decode the bitstream to obtain residual information of the to-be-decoded feature element by using the entropy decoder network 810 based on the second probability distribution mean, and obtain the to-be-decoded feature element based on the residual information and the second probability distribution mean.

905a: Restore the to-be-processed picture by using the first picture restoration network 831 based on the three-dimensional feature map obtained through decoding.

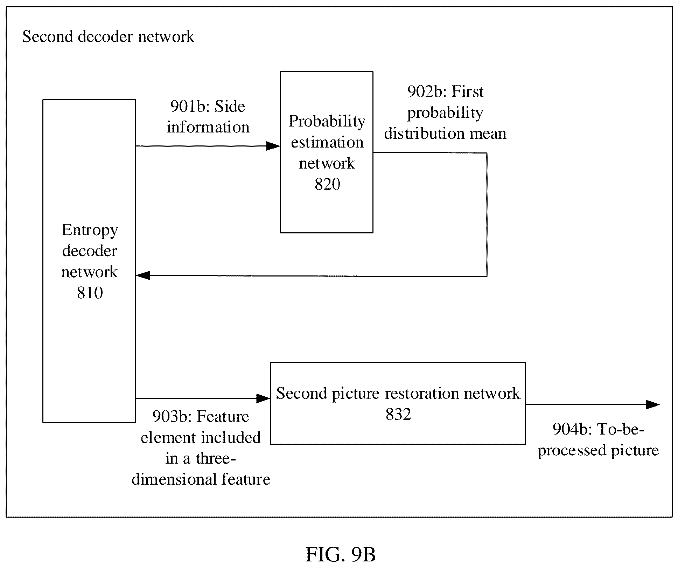

FIG. 9B is a diagram of a possible decoding process using the second decoder network.

901b: Decode the bitstream to obtain side information of a three-dimensional feature map of the to-be-processed picture by using the entropy decoder network 810, where the three-dimensional feature map includes a plurality of feature elements.

902b: Estimate a first probability distribution mean of a to-be-decoded feature element by using the probability estimation network 820 based on the side information.

903b: Decode the bitstream to obtain residual information of the to-be-decoded feature element by using the entropy decoder network 810 based on the first probability distribution mean, and obtain the to-be-decoded feature element based on the residual information and the first probability distribution mean.

904b: Restore the to-be-processed picture by using the second picture restoration network 832 based on the three-dimensional feature map obtained through decoding.

In some possible implementations, the probability estimation network in the encoder network (including the first encoder network and the second encoder network) may be the same as the probability estimation network used in the decoder network.

The following describes the solutions in embodiments of this application with reference to specific examples. The following examples are described by using an end-to-end picture encoding and decoding process as an example.

### Example 1:

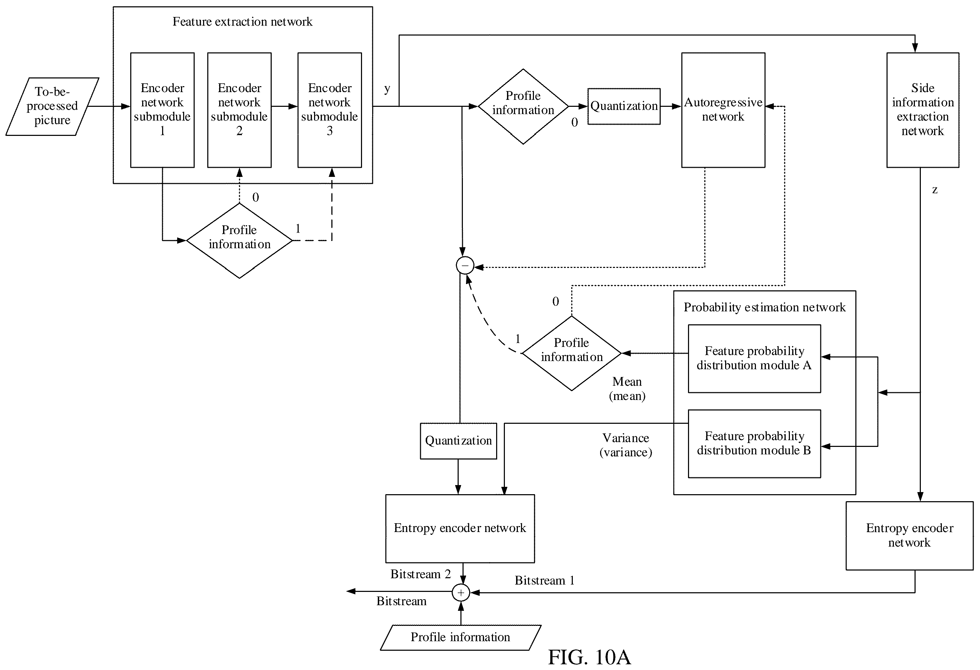

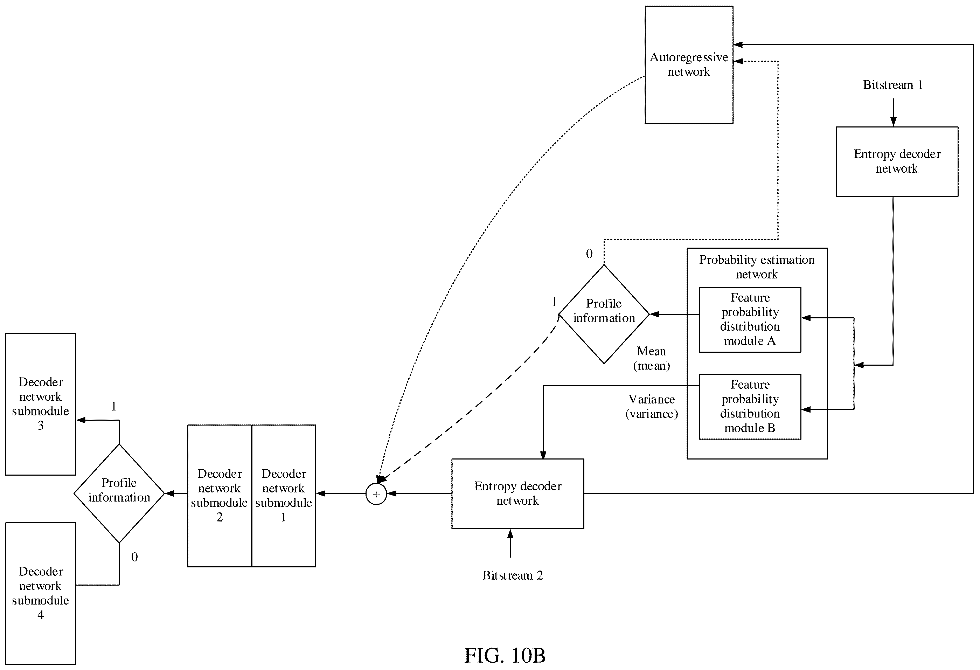

FIG. 10A and FIG. 10B are diagrams of execution processes of an encoder network and that of a decoder network according to embodiments of this application. The encoder and decoder network is dynamically adjusted based on a profile ID. The encoder network is described with reference to the foregoing network structures in FIG. 6A and FIG. 6B. The first feature extraction network (module) 610 includes encoder network submodules 1 to 3. The encoder network submodules 1 to 3 extract features from a to-be-processed picture, and gradually convert the picture from a pixel domain to a feature domain, so that the picture is more easily compressed. The second feature extraction module in the second encoder network includes an encoder network submodule 1 and an encoder network submodule 3.

Correspondingly, the decoder network is described with reference to the network structure shown in FIG. 8. Decoder network submodules 1→2→3 or 1→2→4 gradually restore a three-dimensional feature map to a picture. A difference between the decoder network submodule 3 and the decoder network submodule 4 lies in a structure. For example, a possible difference lies in that the decoder network submodule 3 is a light module that adapts to a terminal-side device with low computing power, and is characterized by faster running but poorer picture restoration quality than the decoder network submodule 4, while the decoder network submodule 4 is a module that adapts to a device with high computing power, and is characterized by slower running but better picture restoration quality than the decoder network submodule 3. In FIG. 10B, an example in which the first picture restoration network of the first decoder network includes the decoder network submodules 1, 2 and 4 is used, and an example in which the second picture restoration network of the second decoder network includes the decoder network submodules 1 to 3 is used.

FIG. 10A is a diagram of an encoding process according to Example 1. Specifically, an implementation process of an encoder side is as follows:

Step 1: Calculate and output a picture feature **y** by using the feature extraction module. During the calculation, whether to execute or skip some network submodules is selected based on the profile ID. When the profile ID is 0, the encoder network submodule 2 is executed, that is, encoding is performed by using the first encoder network. When the profile ID is 1, the encoder network submodule 2 is skipped, that is, encoding is performed by using the second encoder network. In some scenarios, the encoder network submodule 2 may be skipped when the profile ID is 1, or the encoder network submodule 2 may be executed when the profile ID is 0. For example, the picture feature **y** may also be referred to as a feature map **y,** or may be referred to as a three-dimensional feature map y. After feature extraction is performed on the to-be-encoded picture by using feature extraction module to obtain the picture feature **y,** the picture feature **y** may be further quantized, which may be understood as processing (for example, rounding off) a feature value of a floating-point number to obtain an integer feature value, so as to obtain a quantized feature map **ŷ.**

Step 2: Input the picture feature **y** calculated in step 1 into the side information extraction network (module), to extract side information **z;** and quantize **z** to obtain **ẑ**, and compress **ẑ** into a bitstream 1. It should be noted that the side information extraction module is not mandatory. In some possible scenarios, after feature extraction is performed on an original picture, quantization compression (or encoding) is directly performed to generate a bitstream.

In some embodiments, the quantized feature map **ŷ** may be input into the side information extraction network, to output quantized side information **ẑ**. The side information extraction module may be implemented by a neural network. A specific neural network structure is described by using an example subsequently, and details are not described herein. The side information **ẑ** may be understood as a feature map **ẑ** obtained by performing further feature extraction on the quantized feature map **ŷ**, and a quantity of feature elements included in **ẑ** is less than a quantity of feature elements included in the feature map **ŷ**.

In some scenarios, the encoder network (the first encoder network and the second encoder network) may further include a quantization network, configured to perform a quantization operation on the picture feature **y.** In some other scenarios, the side information extraction network may have a function of performing a quantization operation, so that the side information extraction network performs a quantization operation on the picture feature **y.**

Step 3: Obtain a probability distribution of the picture feature **y** from the side information. When the profile ID is 1, the side information is input into the probability estimation network. The probability estimation network (which may also be referred to as a probability estimation module) includes feature probability distribution modules A and B that predict a mean (mean) and variance information of the picture feature **y.** The feature probability distribution modules A and B may also be referred to as feature map probability distribution estimation modules A and B, or may be referred to as other names. This is not limited in this embodiment of this application. When the profile ID is 0, the side information is input into the feature probability distribution modules A and B. The feature probability distribution module B outputs the variance information of the picture feature **y.** The output of the feature probability distribution module A and the quantized picture feature **y** need to be sent to the autoregressive module to generate the mean (mean) of the picture feature **y.** In some scenarios, the feature probability distribution modules A and B may be combined into one module, that is, functions thereof are performed by one module.

For example, the probability estimation network may use a Gaussian single model (Gaussian single model, GSM), an asymmetric Gaussian model, a Gaussian mixture model (Gaussian mixture model, GMM), or a Laplace distribution (Laplace distribution) model. The probability estimation network may alternatively be a deep learning-based network, for example, a recurrent neural network (recurrent neural network, RNN) or a convolutional neural network (convolutional neural network, CNN). This is not limited herein.

Step 4: Calculate residual information of the picture feature **y** relative to the mean r=**y**-mean with reference to the probability distribution information (mean mean and variance variance) of the picture feature **y** obtained in step 3, and perform entropy encoding on quantized residual information **r̂** to obtain a compressed bitstream 2. The residual information r may also be referred to as a residual feature map r. Therefore, the quantized residual information **r̂** may also be referred to as a quantized residual feature map **r̂**, or may be briefly referred to as a quantized residual feature **r̂**.

Step 5: Combine the bitstream 1 and the bitstream 2 into one bitstream, and write the profile ID into the bitstream, for example, into header information (header) of the bitstream.

It should be noted that the encoding steps in step 2, step 4, and step 5 of the encoder side may be combined. In step 2, the side information **ẑ** is not encoded and written into the bitstream. Instead, after the quantized residual information **r̂** is obtained in step 4, the quantized residual information **r̂** and the side information **ẑ** are encoded (for example, entropy encoded) and written into the bitstream.

FIG. 10B is a diagram of a decoding process according to Example 1. Specifically, an implementation process of a decoder side is as follows:

Step 1: Parse a bitstream to obtain profile ID information by using the entropy decoder network (module), for example, obtain the profile ID from a header of the bitstream. The profile ID is profile information in the bitstream, and indicates processing that needs to be supported by the decoder, for example, a general_profile_idc syntax element in the H.265 standard. The profile ID may be an integer (certainly, the profile ID may not be an integer, and this is not specifically limited in this application). The profile information indicates processing that needs to be supported by the decoder, or may be understood as that the profile information indicates different networks that need to be used by the decoder.

Step 2: Decode the bitstream (for example, a bitstream 1) to obtain side information by using the entropy decoder network, for example, may decode the bitstream 1 to obtain quantized side information **ẑ** through asymmetric numeral system (asymmetric numeral system, ANS)/arithmetic decoding.

Step 3: Obtain a probability distribution of a feature map **ŷ** from the side information **ẑ** by using the probability estimation network (module). When profile ID=1, the side information **ẑ** is input into the probability estimation module (or referred to as a probability estimation network), and probability estimation is performed on each feature element ŷ[x][y][i] in the to-be-decoded feature map **ŷ**, to obtain a probability distribution of the feature element **ŷ**[x][y][i]. It is assumed that the feature element **ŷ**[x][y][i] meets a Gaussian distribution of a mean µ[x][y][i] and a variance σ[x][y][i], where the mean µ[x][y][i] may be used as a predicted value of the feature element ŷ[x][y][i]. When profile ID=0, the side information **ẑ** is input into the probability estimation module (or referred to as a probability estimation network), and probability estimation is performed on each feature element ŷ[x][y][i] in the to-be-decoded feature map **ŷ**, to obtain a probability distribution of the feature element **ŷ**[x][y][i]. Then, a predicted value of the current to-be-decoded feature element is obtained based on the autoregressive network by using information of a decoded feature element and a mean output by the probability estimation network.

Parameters x, y, and i in the feature element **ŷ**[x][y][i] are all positive integers, and coordinates (x, y, i) represent a position of the current to-be-decoded feature element. Specifically, the coordinates (x, y, i) represent a position of the current to-be-decoded feature element relative to a feature element of an upper left vertex in a current three-dimensional feature map. This step may be specifically implemented by the probability estimation module. The probability estimation method used at the decoder side may be correspondingly the same as the probability estimation method used at the encoder side, that is, the structure of the probability estimation module of the decoder side may be the same as the structure of the probability estimation module of the encoder side, and details are not described herein.

The bitstream 2 may be understood as a bitstream converted from a plurality of matrices y, and decoding is a process of restoring the plurality of matrices y from the bitstream. Restoring y is sequentially restoring an element and then an element. For example, in a 10x10 matrix, elements of the matrix are restored one by one in order from left to right and from top to bottom. When the element in the seventh row and the eighth column is restored, elements (that is, all elements whose horizontal coordinates are less than 7 and vertical coordinates are less than 8) before the element may be referred to as context of the element, that is, may be understood as decoded context information.

Step 4: Continue to parse the bitstream to obtain a quantized residual feature map r̂ by using the entropy decoder network by using the Gaussian distribution of the mean µ and the variance σ of each feature element in the quantized feature map **ŷ** obtained in step 3, and further obtain the quantized feature map ŷ = r̂ + µ based on r̂ and µ.

In an example, a possible implementation of parsing the bitstream to obtain the feature map r̂ is as follows:

A probability with a value k P(k) of the to-be-decoded feature element r̂[x|[y][i] is obtained based on the probability distribution (for example, the Gaussian distribution of the mean value 0 and the variance σ), and the bitstream is parsed to obtain the feature element r̂[x][y][i] through the ANS decoding/arithmetic decoding based on P(k). k may be any integer, for example, 0, 1, 2, or 3.

Step 5: Restore the picture from the quantized **ŷ** by using the picture restoration network. In a process of running the picture restoration network (or reconstruction network), after the decoder network submodule 1 and the decoder network submodule 2 are executed, the decoder network submodule 3 and the decoder network submodule 4 are selected based on a value of the profile ID. If the profile ID is 1, the decoder network submodule 3 is selected, that is, the second decoder network is used; or if the profile ID is 0, the decoder network submodule 4 is selected, that is, the first decoder network is used.

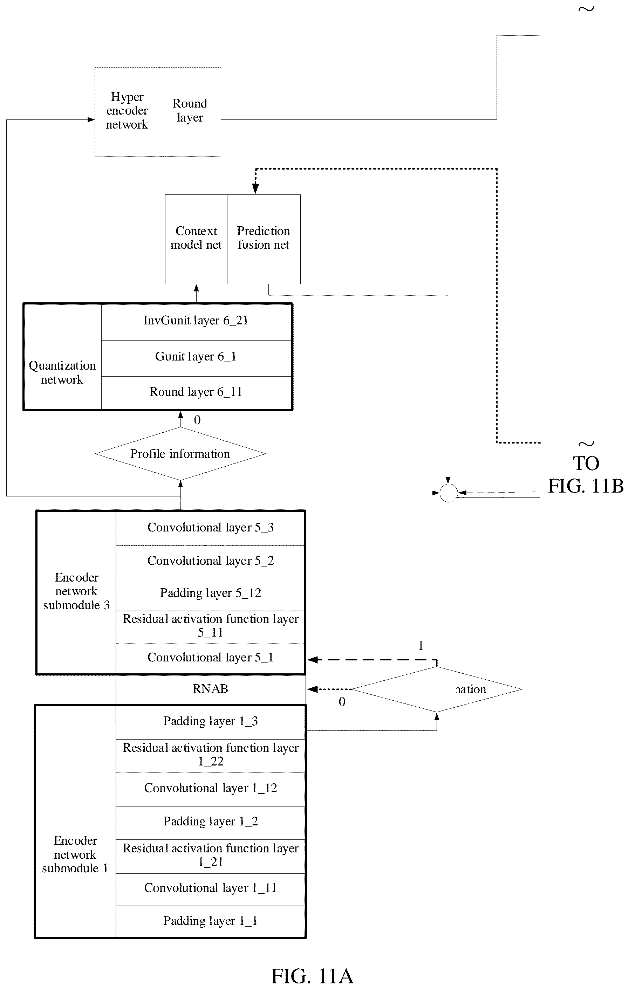

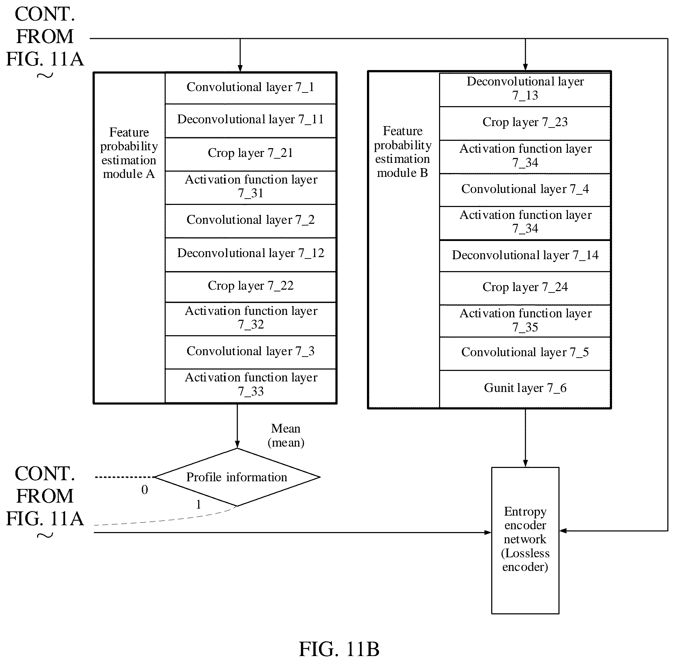

The following describes, with reference to specific examples, a structure of each sub-network of the foregoing encoder network (including the first encoder network and the second encoder network). FIG. 11A and FIG. 11B are a diagram of an execution process of an encoder network. It should be noted that FIG. 11A and FIG. 11B are merely an example, and does not constitute a limitation on a specific structure of the encoder network.

Refer to FIG. 11A and FIG. 11B. The encoder network submodule 1 includes a plurality of layers, which are respectively a padding (padding) layer 1_1, a convolutional (Conv) layer 1_11, a residual activation function (ResAU) layer 1_21, padding 1_2, a convolutional layer 1_12, a residual activation function layer 1_22, and padding 1_3. In this embodiment of this application, a convolution with a convolution size of K×K, a quantity of output channels of M, and a stride (Stride) of N may be represented as Conv M×K×K SN. In FIG. 11A and FIG. 11B, an example in which the convolutional (Conv) layer 1_11 and the convolutional layer 1_12 use Conv12 28×3×3 S2 is used.

For example, the padding layer may use zeros padding (constant padding) (padding 0 by default), reflect padding (reflect padding), replicated padding (replicated padding), and circular padding (circular padding). For example, padding 1_1, padding 1_2, and padding 1_3 all use the replicate padding, to make a length and a width of an input tensor to an even number through padding by using the replicated padding (padding with a nearest element). For example, if the length and the width of the input tensor are 5 and 6 respectively, the padding layer pads an element in a length direction to change the length to an even number 6. However, the width 6 of the input tensor is an even number. Therefore, a padding operation is not performed in a width direction.

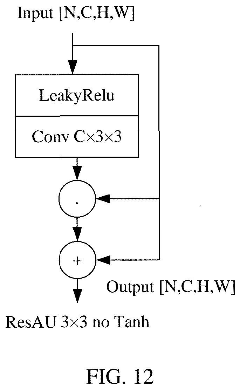

The residual activation function layer 1_21 and the residual activation function layer 1_22 are mainly used as activation functions, and may further provide an attention mechanism. In an example, the residual activation function layer 1_21 and the residual activation function layer 1_22 may use a ResAU 3×3 no tanh network. The ResAU 3×3 no tanh network may use a structure shown in FIG. 12. The residual activation function layer 1_21 (and the residual activation function layer 1_22) includes an activation function layer 2_1 and a convolutional layer 2_1. In FIG. 12, ⊙ and ⊕ are an element-wise multiplication operation and an element-wise addition operation. For example, the convolutional layer 2_1 uses C×3×3, where a size of a convolutional kernel is 3×3, and a number of output channels is C. In FIG. 12, W represents a width of an input picture block (or a number of rows of a vector matrix), H represents a height of an input picture block (or a number of columns of a vector matrix), and N represents a stride. For example, the activation function layer 2_1 may use a Leaky ReLU function. The Leaky ReLU function is used to assign a non-zero slope to all negative values.

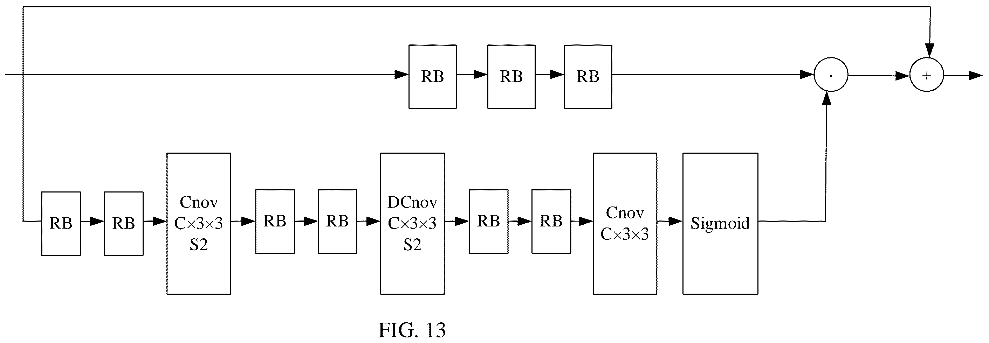

The encoder network submodule 2 may use a residual non-local attention block (residual non-local attention block, RNAB), configured to provide an attention mechanism, for example, may be configured to provide global or local attention information in space. For example, FIG. 13 is a possible diagram of a structure of an RNAB. The RNAB uses a network structure including a plurality of residual block (residual block, RB) layers, a plurality of convolutional layers, a deconvolutional layer, and an activation function layer (for example, a sigmoid function is used). Global or local attention information in space is extracted by using the RNAB.

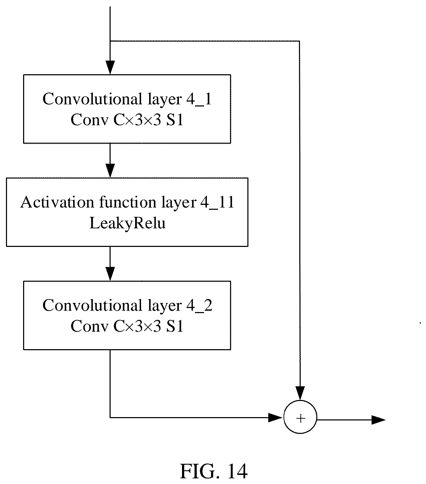

In an example, the residual block layer may use a network structure shown in FIG. 14. The RB layer may include a convolutional layer 4_1, an activation function layer 4_11, and a convolutional layer 4_2. In some embodiments, the activation function layer 4_11 may use a Leaky ReLU function. A main line of the residual block layer in FIG. 14 inputs features into the 3×3 convolutional layer 4_1 to obtain a feature matrix, then outputs the feature matrix by using an activation function, and next perform an operation of adding a result obtained by using the 3×3 convolutional layer 4_2 to the input feature.

Refer to FIG. 11A and FIG. 11B. The encoder network submodule 3 includes a convolutional layer 5_1, a residual activation function layer 5_11, a padding layer 5_12, a convolutional layer 5_2, and a convolutional layer 5_3. In FIG. 11A and FIG. 11B, the convolutional layer 5_1 and the convolutional layer 5_2 may use conv 128×3×3 S2. The convolutional layer 5_3 uses conv 128×1×1 S1. The residual activation function layer 5_1 may use ResAU 3×3 no Tanh, for example, a network structure shown in FIG. 12.

The quantization network may include a round layer 6_11, configured to: perform a quantization operation, which may also be referred to as a rounding operation; and return a rounded value of a floating-point number. In some embodiments, refer to FIG. 11A and FIG. 11B. The quantization network may further include a Gunit layer 6_1 and an invGunit layer 6_21. The Gunit layer 6_1 and the invGunit layer 6_21 are configured to perform bit rate matching, so that the encoder network has a bit rate adjustment capability. In an example, the Gunit layer 6_1 and the invGunit layer 6_21 may use structures of Gain and Inverse Gain in the paper "G-VAE: A CONTINUOUSLY VARIABLE RATE DEEP IMAGE COMPRESSION FRAMEWORK" by Ze Cui, Jing Wang et al.

In FIG. 11A and FIG. 11B, the side information extraction module may include a hyper encoder net and a round layer. The hyper encoder net may also be referred to as a hyper encoder network. A function of the hyper encoder net is to extract side information z by using an input quantized picture feature y. In FIG. 11A and FIG. 11B, the autoregressive network may include a context model net and a prediction fusion net. The context model net is an autoregressive process. The context model net predicts an expected value of a to-be-encoded element ŷ[:,i,j] by using information about an encoded element ŷ[:,i',j'] (i' ≤ i,j' < j - i - j') with reference to the prediction fusion net. For example, in an implementation process, mask convolution (mask conv) may be used for implementation. The prediction fusion net is configured to receive the information about the encoded element extracted by the context model net and the side information extracted by the hyper decoder, to predict the expected value (or a predicted value) of the to-be-encoded element. The expected value of the to-be-encoded element may be understood as a predicted probability distribution mean.

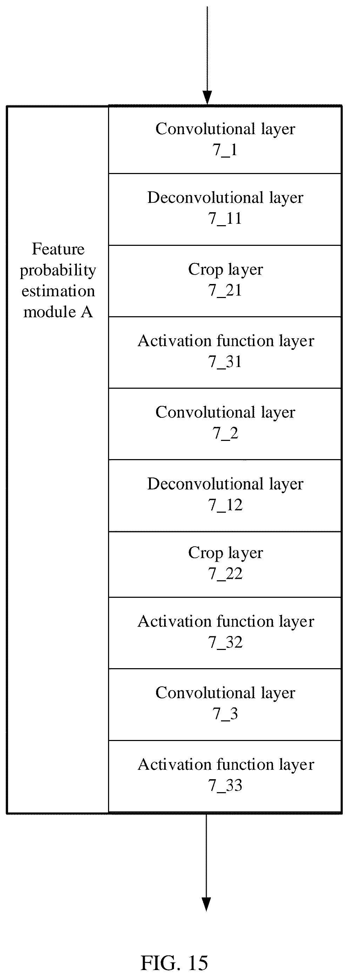

In some possible implementation scenarios, the feature probability estimation module A may use a super decoder network (Hyper Decoder Net). The feature probability estimation module B may use a hyper scale decoder network (Hyper Scale Decoder Net). Certainly, another network structure may alternatively be used, and a network that can implement probability estimation on the side information is applicable to this application. In an example, the feature probability estimation module A may use a network structure of a hyper decoder network shown in FIG. 15. The feature probability estimation module A includes a convolutional layer 7_1, a deconvolutional layer 7_11, a crop (Crop) layer 7_21, an activation function layer 7_31, a convolutional layer 7_2, a deconvolutional layer 7_12, a crop (Crop) layer 7_22, an activation function layer 7_32, a convolutional layer 7_3, and an activation function layer 7_33.

The crop layer 7_21 and the crop layer 7_22 are configured to perform a crop operation on an input tensor. The crop operation may be represented as *Crop*(*Hₒᵤₜ, Wₒᵤₜ, d, s_{d}*)*,* where *Hₒᵤₜ, Wₒᵤₜ* is a length and a width of a picture finally output by the decoder network (or may be understood as a size of a picture input by the encoder network, and the size information may be obtained from a header of the bitstream), and s_{d} is stride (stride) information of a deconvolutional operation. In an example, s_{d} = 2. d represents a depth of the deconvolutional layer. The crop layer inputs a tensor with a size of [C, s_{d}h_{d}, s_{d}w_{d}], and outputs a tensor with a size of [*C,h*_{*d-*1}*, w*_{*d-*1}]*. h_{d} = ceil*(*h*_{*d-*1}/*s_{d}*); *w_{d} = ceil*(*w*_{*d-*1}/*s_{d}*)*, h*₀ = *Hₒᵤₜ, w*₀ *= Wₒᵤₜ.* In an example, in FIG. 11A and FIG. 11B, an example in which the activation function layer 7_31, the activation function layer 7_32, and the activation function layer 7_33 use a LeakyRelu function is used. In FIG. 11A and FIG. 11B, an example in which the convolutional layer 7_1 uses conv 128×1×1 S1, the deconvolutional layer 7_11 uses DConv 128×4×4 S2, the convolutional layer 7_2 uses conv 128×3×3 S1, the deconvolutional layer 7_12 uses DConv 128×4×4 S2, and the convolutional layer 7_3 uses conv 128×3×3 S1 is used.

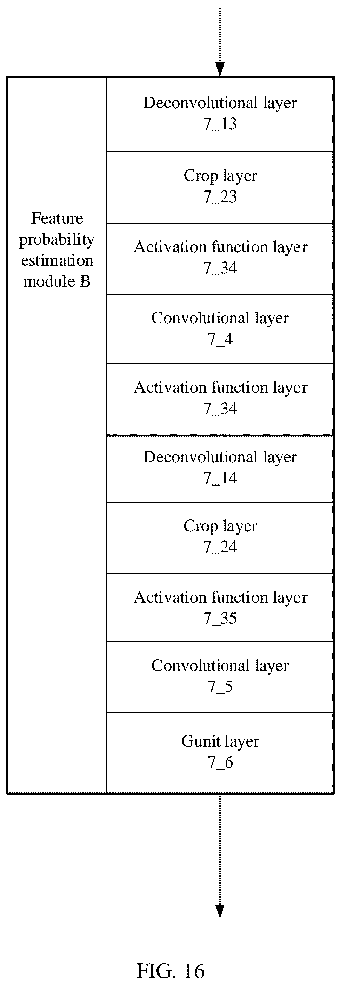

In another example, the feature probability estimation module B may use a network structure of a hyper scale decoder network shown in FIG. 16. The feature probability estimation module B includes a deconvolutional layer 7_13, a crop (Crop) layer 7_23, an activation function layer 7_34, a convolutional layer 7_4, an activation function layer 7_34, a deconvolutional layer 7_14, a crop (Crop) layer 7_24, an activation function layer 7_35, a convolutional layer 7_5, and a Gunit layer 7_6. In FIG. 11A and FIG. 11B, an example in which the deconvolutional layer 7_13 uses DConv 128×4×4 S2, the activation function layer 7_34 uses a LeakyRelu function, the convolutional layer 7_4 uses conv 128×3×3 S1, the deconvolutional layer 7_14 uses DConv 128×4x4 S2, the activation function layer 7_35 uses a LeakyRelu function, and the convolutional layer 7_5 uses conv 128×3×3 S1 is used.

In FIG. 11A and FIG. 11B, a lossless encoder (lossless encoder) is used in an entropy encoder network, and a function of the lossless encoder is to convert a to-be-encoded feature into a bitstream.

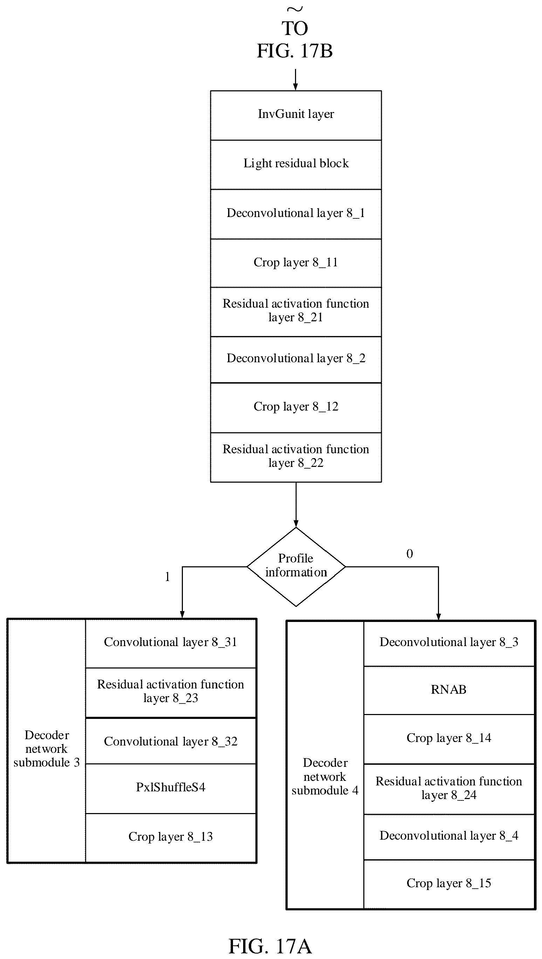

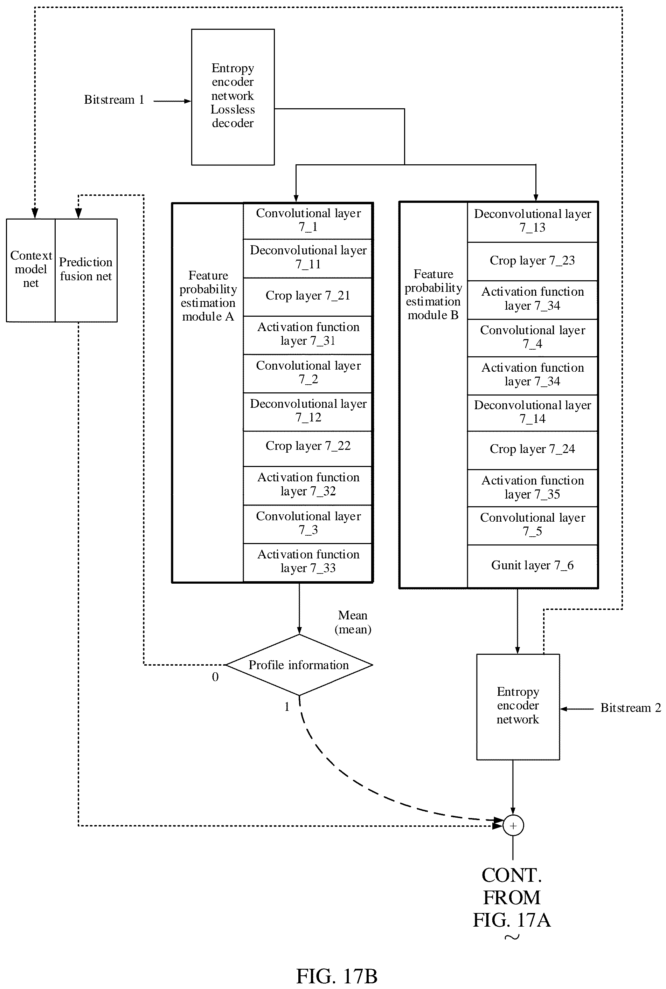

The following describes, with reference to specific examples, a structure of each sub-network of the foregoing decoder network (including the first decoder network and the second decoder network). FIG. 17A and FIG. 17B are a diagram of an execution process of a decoder network. It should be noted that FIG. 17A and FIG. 17B are merely an example, and does not constitute a limitation on a specific structure of the decoder network. In FIG. 17A and FIG. 17B, a lossless decoder is used in an entropy decoder network, and a function of the lossless decoder is to restore a to-be-decoded bitstream to a feature. The probability estimation network in the decoder network may use a same structure as the encoder network. For details, refer to FIG. 11A and FIG. 11B. The decoder network submodule 1 includes an invGunit layer, a light residual block (LightResBlock), a deconvolutional layer 8_1, a crop (crop) layer 8_11, and a residual activation function layer 8_21. The decoder network submodule 2 includes a deconvolutional layer 8_2, a crop (crop) layer 8_12, and a residual activation function layer 8_22. The residual activation function layer 8_21 and the residual activation function layer 8_22 may use a ResAU structure. The deconvolutional layer 8_1 may use Dconv 96×4×4 S2, and the deconvolutional layer 8_2 may use Dconv 64×4×4 S2.

The decoder network submodule 3 may include a convolutional layer 8_31, a residual activation function layer 8_23, a convolutional layer 8_32, PxlShuffleS4, and a crop layer 8_13. The decoder network submodule 4 includes a deconvolutional layer 8_3, an RNAB, a crop layer 8_14, a residual activation function layer 8_24, a deconvolutional layer 8_4, and a crop layer 8_15. For example, the RNAB may use the network structure shown in FIG. 13.

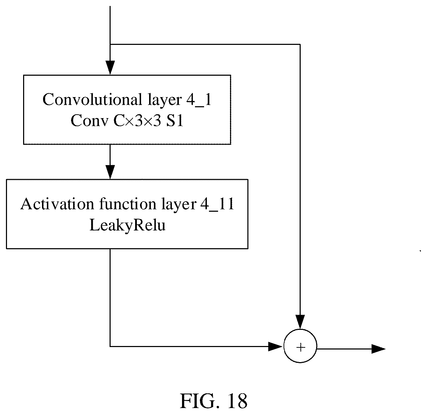

In an example, for a network structure of the light residual block (LightResBlock), refer to FIG. 18. PxlShuffleS4: represents a pixel shuffle operation of 4x upsampling.

### Example 2:

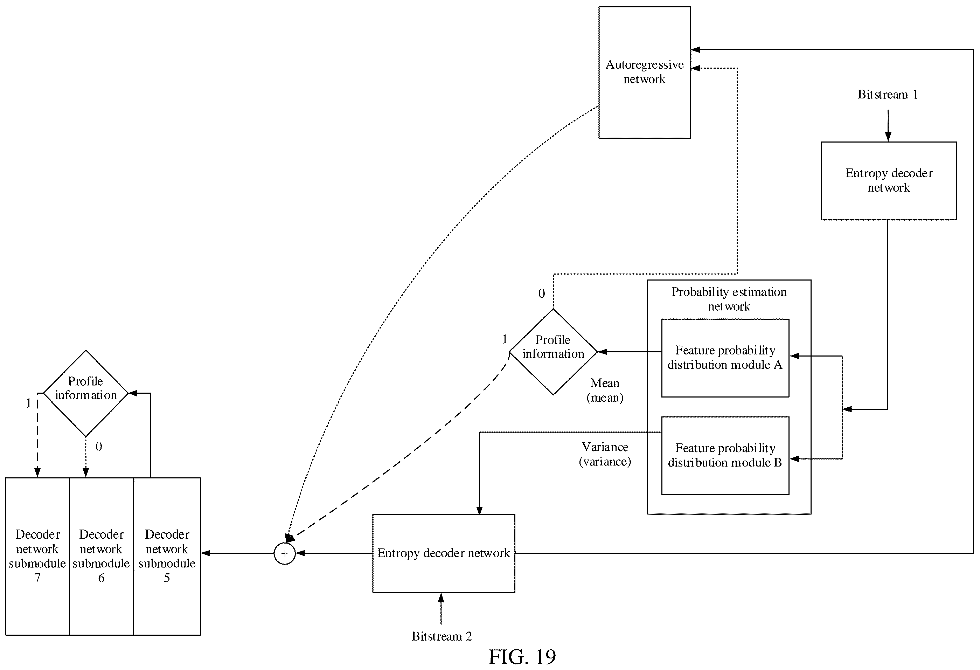

An encoder network used in Example 2 is the same as that used in Example 1, and an execution process is also similar. Details are not described herein. The decoder network in Example 2 is different from the decoder network in Example 1. In Example 2, the second decoder network in the decoder network is a subnet of the first decoder network, or the second picture restoration network in the second decoder network is a subnet of the structure of the first picture restoration network in the first decoder network. Refer to FIG. 19. The second picture restoration network includes a decoder network submodule 5 and a decoder network submodule 7, and the first picture restoration network includes decoder network submodules 5 to 7.

Different from Example 1, in Example 2, at the decoder side, when profile IDs are different, selection is not performed in the decoder network submodule 3 and the decoder network submodule 4, but whether to skip a decoder network submodule is selected. When profile ID=1, the decoder network submodule 6 is skipped. When profile ID=0, the decoder network submodule 6 is executed.

### Example 3:

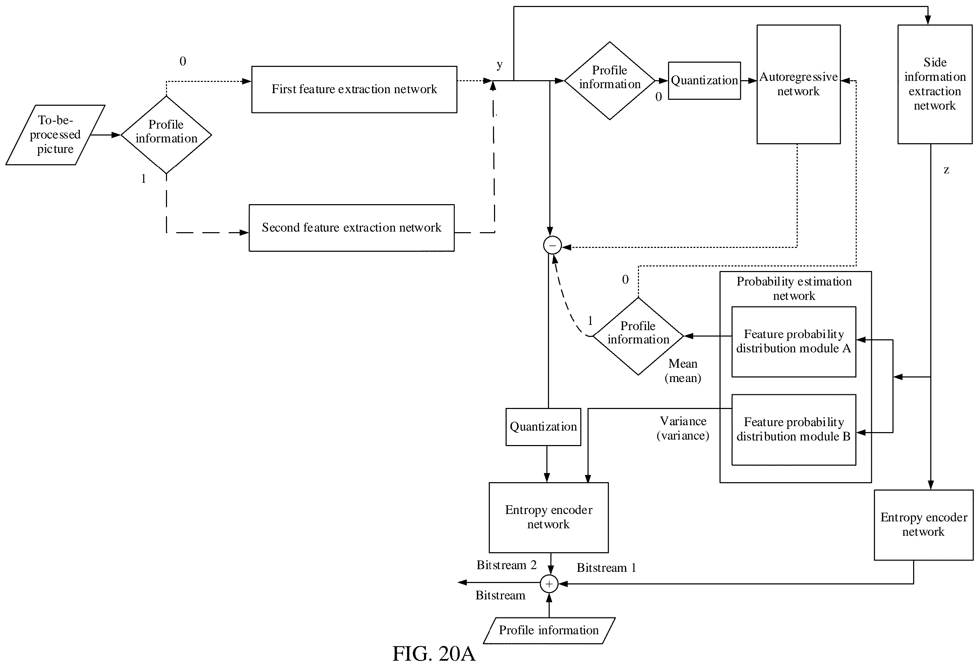

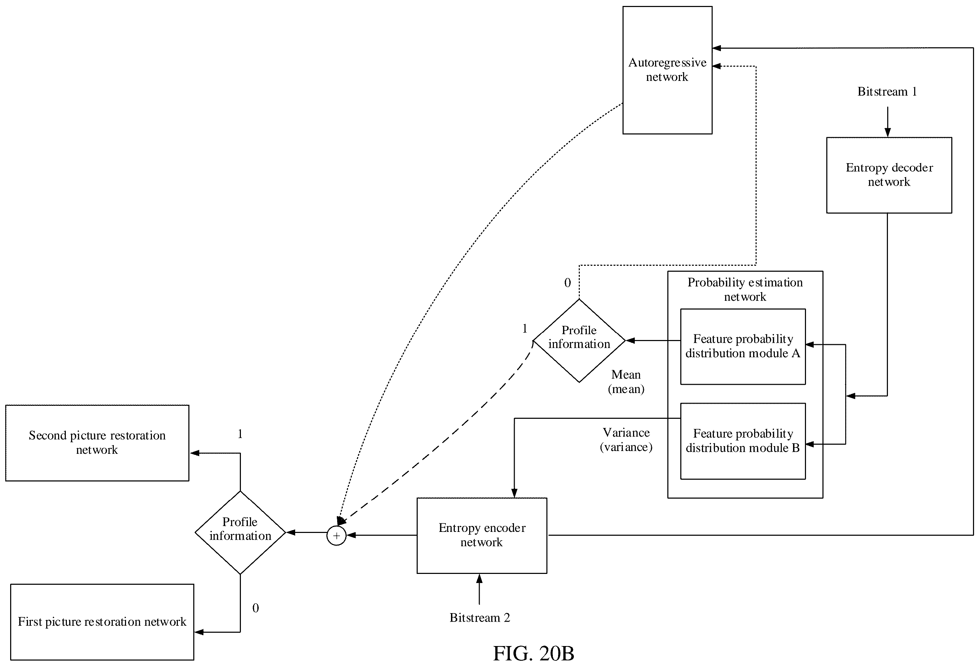

In Example 3, an example in which the feature extraction networks of the two encoder networks are two different networks, and the picture restoration networks of the two decoder networks are two different networks is used. Refer to FIG. 20A. The encoder network includes a first feature extraction network, a second feature extraction network, a quantization network, an autoregressive network, a side information extraction network, a probability estimation network, and an entropy encoder network. Correspondingly, refer to FIG. 20B. The decoder network includes an autoregressive network, a side information extraction network, a probability estimation network, a first picture restoration network, a second picture restoration network, and an entropy decoder network.

As shown in FIG. 20A, a difference between an implementation process of the encoder side and Example 1 lies in step 1. In a process of calculating the input picture feature y, different feature extraction networks are selected based on profile IDs. When profile ID=0, the first feature extraction network is selected. When profile ID=1, the second feature extraction network is selected.

Similarly, a difference between an implementation process of the decoder side and that of Example 1 lies in step 5, that is, the picture is restored from ŷ by using the picture restoration network. When the decoder network is running, picture restoration networks of different structures are selected based on profile IDs. When profile ID=0, the first picture restoration network is selected. When profile ID=1, the second picture restoration network is selected.

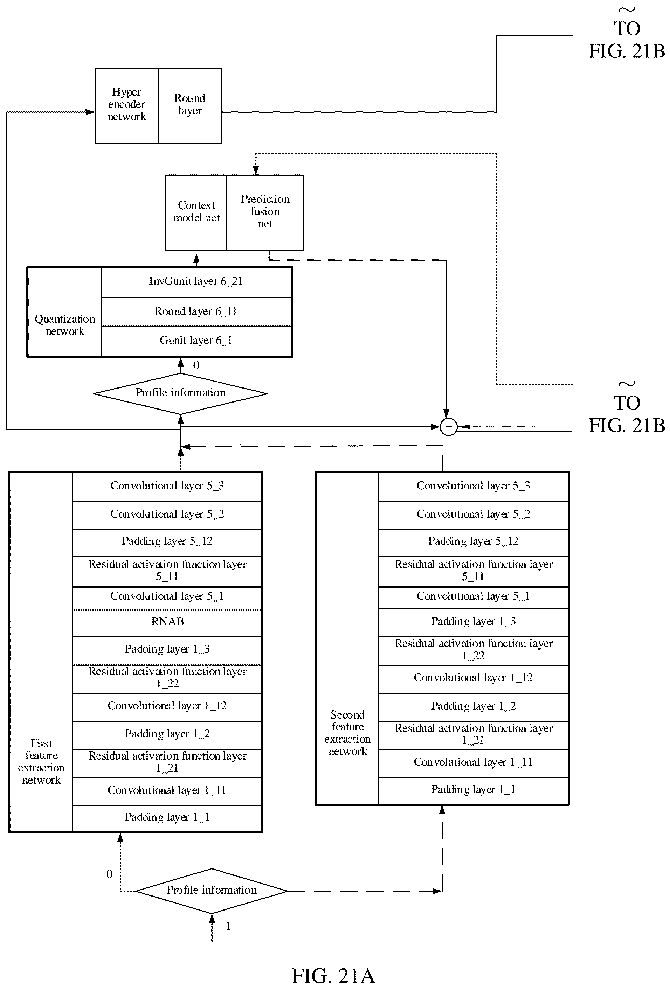

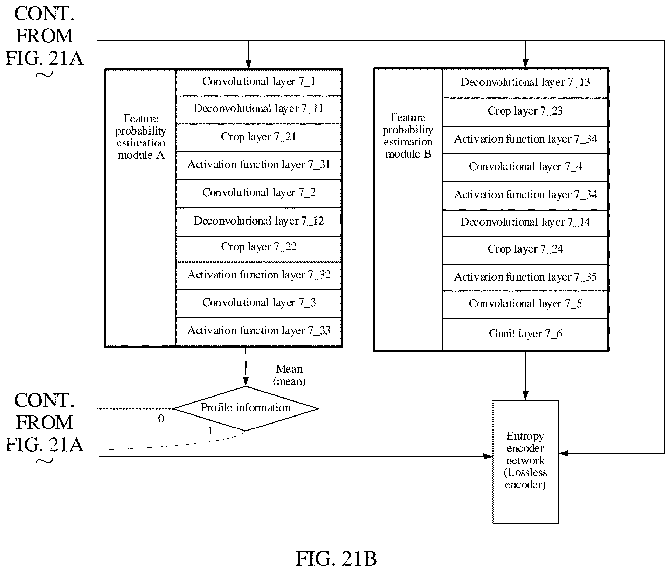

The following describes, with reference to specific examples, a structure of each sub-network of the foregoing encoder network (including the first encoder network and the second encoder network). FIG. 21A and FIG. 21B are a diagram of an execution process of an encoder network. It should be noted that FIG. 21A and FIG. 21B are merely an example, and does not constitute a limitation on a specific structure of the encoder network. In FIG. 21A and FIG. 21B, the first feature extraction network includes a padding (padding) layer 1_1, a convolutional (Conv) layer 1_11, a residual activation function (ResAU) layer 1_21, padding 1_2, a convolutional layer 1_12, a residual activation function layer 1_22, padding 1_3, an RNAB, a convolutional layer 5_1, a residual activation function layer 5_11, a padding layer 5_12, a convolutional layer 5_2, and a convolutional layer 5_3. The second feature extraction network includes a padding (padding) layer 1_1, a convolutional (Conv) layer 1_11, a residual activation function (ResAU) layer 1_21, padding 1_2, a convolutional layer 1_12, a residual activation function layer 1_22, padding 1_3, a convolutional layer 5_1, a residual activation function layer 5_11, a padding layer 5_12, a convolutional layer 5_2, and a convolutional layer 5_3. For descriptions of the foregoing layers, refer to the related descriptions in the embodiment corresponding to FIG. 11A and FIG. 11B. Details are not described herein. For structures of other networks in FIG. 21A and FIG. 21B, refer to the descriptions in Example 1. Details are not described herein.

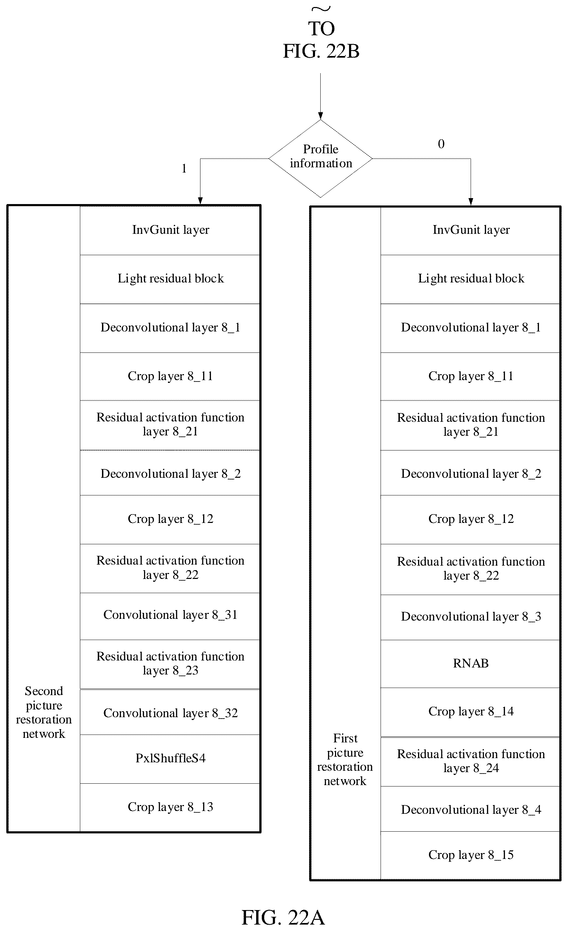

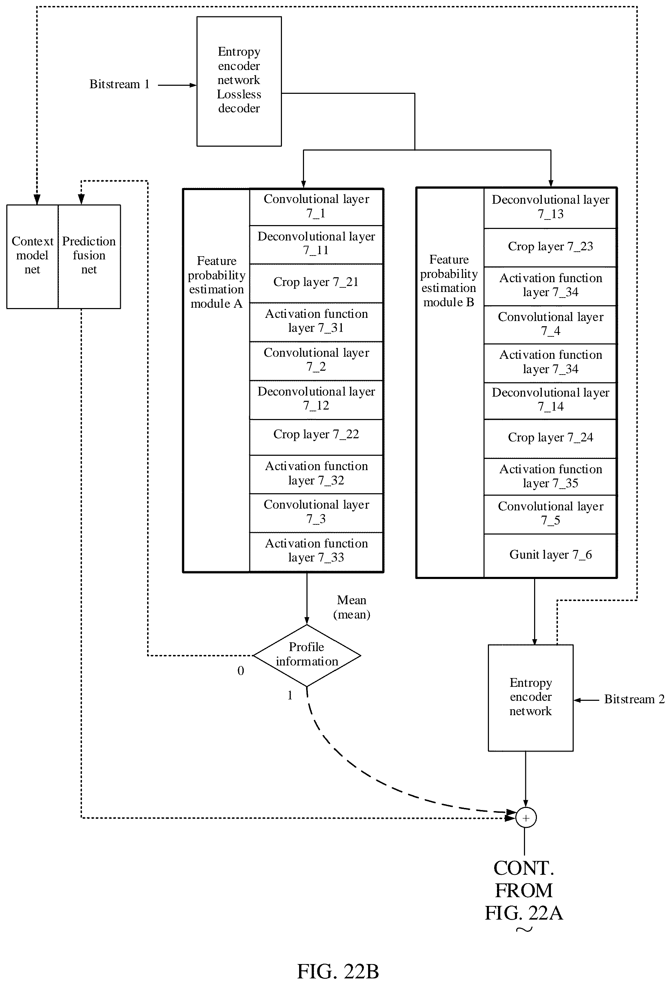

FIG. 22A and FIG. 22B are a diagram of an execution process of a decoder network. It should be noted that FIG. 22A and FIG. 22B are merely an example, and does not constitute a limitation on a specific structure of the encoder network. The first picture restoration network includes an invGunit layer, a light residual block (LightResBlock), a deconvolutional layer 8_1, a crop (crop) layer 8_11, a residual activation function layer 8_21, a deconvolutional layer 8_2, a crop (crop) layer 8_12, a residual activation function layer 8_22, a deconvolutional layer 8_3, an RNAB, a crop layer 8_14, a residual activation function layer 8_24, a deconvolutional layer 8_4, and a crop layer 8_15. The second picture restoration network includes an invGunit layer, a light residual block (LightResBlock), a deconvolutional layer 8_1, a crop (crop) layer 8_11, a residual activation function layer 8_21, a deconvolutional layer 8_2, a crop (crop) layer 8_12, a residual activation function layer 8_22, a convolutional layer 8_31, a residual activation function layer 8_23, a convolutional layer 8_32, PxlShuffleS4, and a crop layer 8_13. For descriptions of the foregoing layers, refer to the related descriptions in the embodiment corresponding to FIG. 11A and FIG. 11B. Details are not described herein. For structures of other networks in FIG. 22A and FIG. 22B, refer to the descriptions in Example 1. Details are not described herein.

It should be noted that the structures of the foregoing networks are merely used as examples, and a specific network structure is not specifically limited. A network structure that can implement a corresponding function is applicable to this application.

In addition, it should be noted herein that the foregoing submodule-level adjustment and the foregoing entire network-level adjustment performed on the encoder and decoder network based on the profile ID may be flexibly combined. For example, in a possible case, the encoder side executes a dynamic computation graph on a cloud side by using a framework such as PyTorch, and adjusts an encoder network submodule based on a profile ID; and the decoder side executes a static computation graph on a device side, and switches the entire decoder network based on profile information.

In embodiments of this application, the encoder side transmits network structure information, so that the decoder side can adjust the decoder network by using bitstream content. The solution has the following advantages: 1. For bitstreams generated by using different AI encoder networks, a decoder side may select different decoder network structures by using bitstream content, to implement decoding. This brings high flexibility to a codec side. A user may adjust encoder and decoder network computing power of the user based on a scenario of the user, to flexibly balance a delay and compression performance. 2. A user can dynamically select and adjust some decoder network modules based on a profile ID or switch between different decoder networks.

It may be clearly understood by a person skilled in the art that, for the purpose of convenient and brief description, for a specific working process of the communication system described above, refer to a corresponding process in the foregoing method embodiments. Details are not described herein again.

An embodiment of this application provides a computer-readable medium, configured to store a computer program. The computer program includes instructions used to perform the method steps in the method embodiment corresponding to FIG. 5.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A picture encoding method, comprising:
encoding identification information indicating a used decoder network into a bitstream, wherein
the identification information is a first value, indicating that the decoder network used to decode the bitstream to obtain a to-be-processed picture is a first decoder network; or
the identification information is a second value, indicating that the decoder network used to decode the bitstream to obtain a to-be-processed picture is a second decoder network, wherein a processing resource required by the first decoder network is higher than a processing resource required by the second decoder network; and
sending the bitstream.

2. The method according to claim 1, wherein the first decoder network and the second decoder network are completely different decoder networks, or the first decoder network and the second decoder network share a part of subnet, or the second decoder network is a subnet of the first decoder network.

3. The method according to claim 1 or 2, wherein the method further comprises:
obtaining the identification information; and
when the identification information is the first value, encoding, into the bitstream, residual information obtained by encoding the to-be-processed picture based on a first encoder network; or
when the identification information is the second value, encoding, into the bitstream, residual information obtained by encoding the to-be-processed picture based on a second encoder network, wherein
a processing resource required by the first encoder network is higher than a processing resource required by the second encoder network.

4. The method according to claim 3, wherein the first encoder network and the second encoder network are two different encoder networks, or the first encoder network and the second encoder network share a part of subnet, or the second encoder network is a subnet of the first encoder network.

5. The method according to claim 4, wherein the first encoder network comprises a first feature extraction network, an autoregressive network, a side information extraction network, and a probability estimation network; and
the residual information obtained by encoding the to-be-processed picture by using the first encoder network comprises:
extracting a three-dimensional feature map of the to-be-processed picture by using the first feature extraction network, wherein the three-dimensional feature map comprises a plurality of feature elements;
extracting side information of a to-be-encoded feature element from the three-dimensional feature map by using the side information extraction network;
estimating a first probability distribution mean of the to-be-encoded feature element by using the probability estimation network based on the side information;
inputting an encoded feature element and the first probability distribution mean into the autoregressive network to obtain a second probability distribution mean of the to-be-encoded feature element; and
obtaining residual information of the to-be-encoded feature element based on the to-be-encoded feature element and the second probability distribution mean of the to-be-encoded feature element.

6. The method according to claim 5, wherein the second encoder network comprises a second feature extraction network, a side information extraction network, and a probability estimation network; and
the residual information obtained by encoding the to-be-processed picture by using the second encoder network comprises:
extracting a three-dimensional feature map of the to-be-processed picture by using the second feature extraction network, wherein the three-dimensional feature map comprises a plurality of feature elements;
extracting side information of a to-be-encoded feature element from the three-dimensional feature map by using the side information extraction network;
estimating a probability distribution mean of the to-be-encoded feature element by using the probability estimation network based on the side information; and
obtaining residual information of the to-be-encoded feature element based on the to-be-encoded feature element and the probability distribution mean.

7. The method according to claim 6, wherein the second feature extraction network is a subnet of the first feature extraction network, or the second feature extraction network and the first feature extraction network are two completely different subnets.

8. The method according to any one of claims 5 to 7, wherein the method further comprises:
encoding the side information into the bitstream.

9. The method according to any one of claims 1 to 8, wherein the identification information is located in a header of the bitstream.

10. A picture decoding method, comprising:
receiving a bitstream;
decoding the bitstream to obtain identification information indicating a used decoder network; and
when the identification information is a first value, decoding the bitstream to obtain a to-be-processed picture by using a first decoder network; or
when the identification information is a second value, decoding the bitstream to obtain a to-be-processed picture by using a second decoder network, wherein a processing resource required by the first decoder network is higher than a processing resource required by the second decoder network.

11. The method according to claim 10, wherein the first decoder network and the second decoder network are completely different decoder networks, or the first decoder network and the second decoder network share a part of subnet, or the second decoder network is a subnet of the first decoder network.

12. The method according to claim 10 or 11, wherein the first decoder network comprises an entropy decoder network, a probability estimation network, an autoregressive network, and a first picture restoration network; and
decoding the bitstream to obtain the to-be-processed picture by using the first decoder network comprises:
decoding the bitstream to obtain side information of a three-dimensional feature map of the to-be-processed picture by using the entropy decoder network, wherein the three-dimensional feature map comprises a plurality of feature elements;
estimating a first probability distribution mean of a to-be-decoded feature element by using the probability estimation network based on the side information;
determining a second probability distribution mean of the to-be-decoded feature element by using the autoregressive network based on the first probability distribution mean and a decoded feature element;
decoding the bitstream to obtain residual information of the to-be-decoded feature element by using the entropy decoder network based on the second probability distribution mean, and obtaining the to-be-decoded feature element based on the residual information and the second probability distribution mean; and
restoring the to-be-processed picture by using the first picture restoration network based on the three-dimensional feature map obtained through decoding.

13. The method according to claim 12, wherein the second decoder network comprises the entropy decoder network, the probability estimation network, and the second picture restoration network; and
decoding the bitstream to obtain the to-be-processed picture by using the second decoder network comprises:
decoding the bitstream to obtain side information of a three-dimensional feature map of the to-be-processed picture by using the entropy decoder network, wherein the three-dimensional feature map comprises a plurality of feature elements;
estimating a first probability distribution mean of a to-be-decoded feature element by using the probability estimation network based on the side information;
decoding the bitstream to obtain residual information of the to-be-decoded feature element by using the entropy decoder network based on the first probability distribution mean, and obtaining the to-be-decoded feature element based on the residual information and the first probability distribution mean; and
restoring the to-be-processed picture by using the second picture restoration network based on the three-dimensional feature map obtained through decoding.

14. The method according to claim 13, wherein the second picture restoration network is a subnet of the first picture restoration network, or the picture restoration network and the first picture restoration network share a part of subnet, or the second picture restoration network and the first picture restoration network are two different networks.

15. A picture encoding apparatus, comprising a memory and a video encoder, wherein
the memory is configured to store video data, wherein the video data comprises a to-be-processed picture; and
the video encoder is configured to encode identification information indicating a used decoder network into a bitstream, wherein
the identification information is a first value, indicating that the decoder network used to decode the bitstream to obtain a to-be-processed picture is a first decoder network; or
the identification information is a second value, indicating that the decoder network used to decode the bitstream to obtain a to-be-processed picture is a second decoder network, wherein a processing resource required by the first decoder network is higher than a processing resource required by the second decoder network.

16. A picture decoding apparatus, comprising a memory and a video decoder, wherein
the memory is configured to store video data in a bitstream form, wherein the video data comprises a to-be-processed picture; and
the video decoder is configured to: decode the bitstream to obtain identification information indicating a used decoder network; and
when the identification information is a first value, decode the bitstream to obtain a to-be-processed picture by using a first decoder network; or
when the identification information is a second value, decode the bitstream to obtain a to-be-processed picture by using a second decoder network, wherein a processing resource required by the first decoder network is higher than a processing resource required by the second decoder network.

17. A video decoding device, comprising a nonvolatile memory and a processor that are coupled to each other, wherein the processor invokes program code stored in the memory to perform the method according to any one of claims 10 to 14.

18. A video encoding device, comprising a nonvolatile memory and a processor that are coupled to each other, wherein the processor invokes program code stored in the memory to perform the method according to any one of claims 1 to 14.

19. A computer-readable storage medium, wherein the computer-readable storage medium stores program code, and when the computer program is run on a computer, the computer is enabled to perform the method according to any one of claims 10 to 14.

20. A computer-readable storage medium, wherein the computer-readable storage medium stores program code, and when the computer program is run on a computer, the computer is enabled to perform the method according to any one of claims 1 to 9.

21. A computer-readable storage medium, wherein the computer-readable storage medium stores a video bitstream decoded by one or more processors according to the method according to any one of claims 10 to 14.

22. A computer-readable storage medium, wherein the computer-readable storage medium stores a video bitstream obtained through encoding by one or more processors according to the method according to any one of claims 1 to 9.
